# EUROPÄISCHE PATENTSCHRIFT

(11) **EP 4 078 821 B1**
(45) Veröffentlichungstag und Bekanntmachung des Hinweises auf die Patenterteilung: **02.07.2025**
(21) Anmeldenummer: 20838958.5
(22) Anmeldetag: 18.12.2020
(51) Int. Cl.: H04B 1/3822, H04B 7/155

(54) **SCHALTUNGSANORDNUNG UND VERFAHREN ZUR IDENTIFIZIERUNG EINES FREQUENZBANDS ODER KANALS**
CIRCUIT ARRANGEMENT AND METHOD FOR IDENTIFYING A FREQUENCY BAND OR CHANNEL
AGENCEMENT DE CIRCUIT ET PROCÉDÉ D'IDENTIFICATION D'UNE BANDE OU D'UN CANAL DE FRÉQUENCES

(30) Priorität: 19.12.2019 DE 102019220166
(43) Veröffentlichungstag der Anmeldung: 26.10.2022
(73) Patentinhaber: Molex, LLC, Lisle, IL 60532 (US)
(72) Erfinder: NAST, Helmut, 12557 Berlin (DE); SAYED, Ahmed, 12355 Berlin (DE)
(74) Vertreter: Ter Meer Steinmeister & Partner
(86) Internationale Anmeldenummer: PCT/EP2020/087059
(87) Internationale Veröffentlichungsnummer: WO 2021/123193

(56) Entgegenhaltungen:
- DE-A1- 102017 209 209
- US-A1- 2017 288 766
- US-A1- 2019 028 135
- US-A1- 2019 335 401

## Beschreibung

Die Erfindung betrifft eine Schaltungsanordnung zur Übertragung von Uplink- und Downlink- Signalen zwischen zumindest einem Endgerät und zumindest einer Antenne sowie ein Verfahren zur Identifizierung eines Frequenzbands oder Kanals.

Die DE 102017209 209 A1 offenbart eine Signalkopplungsvorrichtung sowie ein Verfahren zum Betrieb einer Signalkopplungsvorrichtung. Diese Signalkopplungsvorrichtung umfasst eine Einrichtung zur Sendeaktivitätsdetektion. Mittels dieser Einrichtung kann eine sende bandspezifische Sendeaktivitätsdetektion durchgeführt werden. Mit anderen Worten kann ein aktives Sendeband identifiziert werden, wobei in diesem aktiven Sendeband ein Sendesignal übertragen wird.

US 2019/0335401 A1 beschreibt eine Antennen-Einrichtung auf einem Fahrzeug für eine Fahrzeug-Transceiver-Einrichtung, deren Sendeleistungspegel-Regeleinrichtung in der Weise gestaltet ist, dass diese während der bidirektionalen Kommunikation der Sendeleistungspegel mit absinkender Qualität der Kommunikationsverbindung größer eingestellt und umgekehrt mit steigender Übertragungsqualität der Kommunikationsverbindung abgesenkt ist.

DE 101 00 812 A beschreibt eine Diversity-Antenne für den Meterwellen- und Dezimeterwellenbereich auf einer leitend umrahmten, im Wesentlichen aus rechteckförmigen Teilflächen zusammengesetzten, dielektrischen Fläche in einer Kraftfahrzeugkarosserie, z. B. in einem Dachausschnitt oder einem Kofferraum mit dielektrischem Kofferraumdeckel.

DE 10 2007 011 636 A beschreibt eine Antenne für den Rundfunk-Empfang, welche für den Empfang für Frequenzen oberhalb des Hochfrequenzbereichs in einer Kraftfahrzeugfensterscheibe in einer elektrisch leitenden Fahrzeugkarosserie zusammen mit einem aufgedruckten Heizfeld, welches sich bis in die Nähe des oberen Fensterrands erstreckt und aus horizontal angeordneten Heizleitern und an den seitlichen Rändern des Heizfeldes befindlichen Sammelschienen zur Zuführung des Heizgleichstroms über hochfrequent isolierende Entkopplungsnetzwerke besteht, angeordnet ist.

DE102006 057 520 A beschreibt eine Empfangsanlage für frequenzmodulierte, bzw. in der Phase modulierte Hochfrequenzsignale für Fahrzeuge mit einer Mehrantennenanlage mit mindestens zwei Antennen, jeweils einem, im Empfangspfad der entsprechenden Antenne befindlichen, individuell einstellbaren Phasendrehglied und einer nach geschalteten Empfängerschaltung.

Es ist wünschenswert, Frequenzbänder oder Kanäle zu identifizieren, in denen ein Uplink-oder ein Downlink-Signal übertragen wird. Diese Identifizierung kann genutzt werden, um eine gewünschte Signalverarbeitung, insbesondere eine gewünschte Signalverstärkung, durch eine Schaltungsanordnung zur Signalübertragung und/oder die Herstellung gewünschter Signalpfade der Schaltungsanordnung vorzunehmen. So kann es beispielsweise wünschenswert sein, nur die Verstärkereinrichtungen der Schaltungsanordnung zu aktivieren, die zur Verstärkung der in dem entsprechenden Frequenzband bzw. in dem entsprechenden Kanal übertragenen Signale dienen. Andere Verstärkereinrichtungen können hierbei deaktiviert werden, wodurch ein Energieverbrauch der Schaltungsanordnung verringert wird.

Die bekannten Einrichtungen zur Sendeaktivitätsdetektion umfassen in der Regel eine Vielzahl von Filtereinrichtungen, beispielsweise Bandpassfilter, die zur Filterung von frequenzbandspezifischen Signalen dienen. Die Verwendung der Filtereinrichtungen erzeugt somit Herstellungskosten und hat einen hohen Bauraumbedarf.

Weiter umfassen bekannte Einrichtungen eine Vielzahl von Verstärker, Schaltelementen sowie einen breitbandigen Detektor. Dies bedingt einen komplexen Aufbau der Schatungsanordnung.

Es stellt sich das technische Problem, eine Schaltungsanordnung zur Übertragung von Up link- und Downlink-Signalen zwischen zumindest einem Endgerät und zumindest einer Antenne und ein Verfahren zur Identifizierung eines Frequenzbands oder Kanals zu schaffen, die eine genaue, zuverlässige und zeitlich schnelle Identifizierung des Frequenzbands oder des Kanals ermöglichen, wobei Herstellungskosten und eine Komplexität der Schaltungsanordnung reduziert werden.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird eine Schaltungsanordnung zur Übertragung von Uplink- und Downlink-Signalen zwischen zumindest einem Endgerät und zumindest einer Antenne. Durch die Schaltungsanordnung kann eine Kompensation von Verlusten bei der Übertragung dieser Uplink- und Downlink-Signale, beispielsweise von Verlusten signalleitender Bauteile, erfolgen.

Ein Endgerät kann ein portables Endgerät sein, z.B. ein durch einen Nutzer tragbares Endgerät. Ein solches Endgerät kann z.B. ein Mobiltelefon oder ein Tablet-PC sein. Weiter kann ein Endgerät aber auch ein Modem oder ein Steuergerät, insbesondere eines Fahrzeugs, sein, z.B. ein Telematik-Steuergerät. Somit kann das Endgerät auch ein fest verbautes Endgerät, z.B. ein im Fahrzeug fest verbautes Endgerät sein.

Durch die Schaltungsanordnung können mehrere Uplink-Signale übertragen werden. Vorzugsweise können Uplink-Signale mit Frequenzen aus voneinander verschiedenen Uplink-Frequenzbändern übertragbar sein, wobei ein in einem Uplink-Frequenzband übertragenes Uplink-Signal eine Frequenz aus diesem Frequenzband aufweist. Dies kann auch als Inter-Band-Carrier-Aggregation bezeichnet werden. Werden mehrere Uplink-Signale in verschiedenen Kanälen eines Frequenzbandes übertragen, so kann dies als Intra-Band-Carrier-Aggregation bezeichnet werden.

Voneinander verschiedene Uplink-Frequenzbänder können zur Übertragung von Uplink-Signalen gemäß eines Funkstandards oder verschiedener Funkstandards dienen. Solche Standards können beispielsweise ein GSM-Standard, ein UMTS-Standard, ein LTE-Standard, ein WIFI, oder 5G New Radio-Standard sein.

Ein Uplink-Frequenzband kann genau einem, aber auch mehreren Standards zugeordnet sein. So ist es möglich, dass Uplink-Signale gemäß verschiedener Standards im gleichen Uplink-Frequenzband übertragen werden. Wird eine Frequenz eines Uplink-Signals erkannt/detektiert, so kann der Standard in einem solchen Fall nur durch eine zusätzliche Signalanalyse bestimmt werden.

Beispielsweise können in einem Uplink-Frequenzband Signale gemäß des GSM- und/ oder LTE- und/oder UMTS- und/oder eines weiteren Standards übertragen werden.

Durch die Schaltungsanordnung können auch mehrere Downlink-Signale übertragen werden. Somit ist auch bei der Übertragung von Downlink-Signalen eine Inter- oder Intra-Band-Carrier-Aggregation möglich. Vorzugsweise können Downlink-Signale mit Frequenzen aus voneinander verschiedenen Downlink-Frequenzbändern übertragbar sein, wobei ein in einem Downlink-Frequenzband übertragenes Downlink-Signal eine Frequenz aus diesem Frequenzband aufweist. Voneinander verschiedene Downlink-Frequenzbänder können insbesondere zur Übertragung von Downlink-Signalen gemäß den erläuterten verschiedenen Standards dienen. Ein Downlink-Frequenzband kann hierbei genau einem, aber auch mehreren Standards zugeordnet sein. So ist es möglich, dass Downlink-Signale gemäß verschiedener Standards im gleichen Downlink-Frequenzband übertragen werden. Wird eine Frequenz eines Downlink-Signals erkannt/detektiert, so kann der Standard in einem solchen Fall nur durch eine zusätzliche Signalanalyse bestimmt werden.

Weiter können Uplink- und Downlink-Signale in einem Zeitduplex-Verfahren, welches auch als TDD-Verfahren (Time Division Duplex-Verfahren) bezeichnet werden kann, oder in einem Frequenzduplex-Verfahren, welches auch als FDD-Verfahren (Frequency Division Duplex-Verfahren) bezeichnet werden kann, übertragen werden. Die Erfindung ist nicht auf die genannten Funkstandards oder Duplexverfahren beschränkt und betrifft somit alle dem Fachmann bereits bekannten als auch zukünftigen Funkstandards und Duplexerfahren.

Die Schaltungsanordnung kann eine endgeräteseitige Schnittstelle umfassen. Diese kann eine Schnittstelle bezeichnen, über die eine signaltechnische Verbindung zwischen der Schaltungsanordnung und dem Endgerät hergestellt werden kann. Die endgeräteseitige Schnittstelle kann hierbei eine bidirektionale Übertragung von Signalen ermöglichen. Beispielsweise kann die endgeräteseitige Schnittstelle einen sogenannten drahtlosen Koppler umfassen.

Weiter kann die Schaltungsanordnung genau eine antennenseitige Schnittstelle oder mehrere antennenseitige Schnittstellen umfassen. Diese kann eine Schnittstelle bezeichnen, über die eine signaltechnische Verbindung zwischen der Schaltungsanordnung und einer bzw. mehrerer Antenne(n) hergestellt werden kann. Die Antenne kann eine endgeräteexterne Antenne sein. Es ist allerdings auch möglich, dass die Antenne(n) Teil der Schaltungsanordnung ist/sind. Die Antenne kann insbesondere zum Empfang von Signalen dienen, die von einer Basisstation ausgesendet werden. Weiter kann die Antenne zum Aussenden von Signalen dienen, die an die Basisstation oder eine weitere Einrichtung übertragen werden sollen. Die antennenseitige Schnittstelle kann hierbei eine bidirektionale Übertragung von Signalen ermöglichen.

Die Schaltungsanordnung kann hierbei in einem Fahrzeug, insbesondere einem Kraftfahrzeug, angeordnet sein. Die endgeräteexterne Antenne kann hierbei insbesondere eine Fahrzeugantenne sein. Die Schaltungsanordnung kann weiter insbesondere Teil einer Mobilfunkverstärkungsvorrichtung sein oder eine Mobilfunkverstärkungsvorrichtung umfassen oder ausbilden.

Im Sinne dieser Erfindung kann eine Verbindung eine signaltechnische Verbindung bezeichnen. Diese kann insbesondere eine galvanische und/oder induktive und/oder kapazitive Verbindung sein. Vorzugsweise ist eine Verbindung eine galvanische Verbindung. Bauteile der Schaltungsanordnung können vorzugsweise durch galvanische und induktive Verbindungen verbunden sein. Die Verbindung der Schaltungsanordnung mit dem Endgerät kann jedoch eine induktive Verbindung oder eine kapazitive Verbindung sein.

Ein Uplink-Pfad kann hierbei einen Signalpfad bezeichnen, über den ein Uplink-Signal von der endgeräteseitigen Schnittstelle an die antennenseitige Schnittstelle übertragen werden kann. Das Uplink-Signal kann insbesondere ein vom Endgerät erzeugtes und an die endgeräteseitige Schnittstelle übertragenes Signal bezeichnen.

Ein Downlink-Pfad kann hierbei einen Signalpfad bezeichnen, über den ein Downlink-Signal von der antennenseitigen Schnittstelle zur endgeräteseitigen Schnittstelle übertragen werden kann. Das Downlink-Signal kann insbesondere ein von der endgeräteexternen Antenne empfangenes Signal sein, welches z. B. von der Basisstation ausgesendet wurde.

In einem Uplink-Pfad und/oder Downlink-Pfad können Signalverarbeitungsmittel angeordnet sein. Dies kann bedeuten, dass die Übertragung eines Signals über einen dieser Signalpfade über aktive und/oder passive Signalverarbeitungsmittel erfolgen kann. Beispielsweise kann die Signalübertragung über mindestens eine Verstärkereinrichtung und/oder mindestens eine Dämpfereinrichtung und/oder mindestens eine Signalfiltereinrichtung und/oder mindestens eine Signalschalteinrichtung erfolgen.

Die Schaltungsanordnung umfasst mindestens einen Signalkoppler zur Bereitstellung eines ausgekoppelten Uplink-oder Downlink-Signals. Der Signalkoppler kann beispielsweise ein über ein Uplink-Pfad übertragenes Uplink-Signal aus diesem Uplink-Pfad auskoppeln. Entsprechend kann der Signalkoppler auch ein über ein Downlink-Pfad übertragenes Downlink-Signal aus diesem Downlink-Pfad auskoppeln.

Insbesondere kann der Signalkoppler derart angeordnet und/oder ausgebildet sein, dass ein an der vorhergehend erläuterten endgeräteseitigen Schnittstelle anliegendes Signal ausgekoppelt wird. Die Ausbildung eines geeigneten Signalkopplers ist hierbei dem Fachmann bekannt. Insbesondere kann durch den Signalkoppler ein ausgekoppeltes Signal mit geringerer Leistung als das übertragene Uplink-oder Downlink-Signal bereitgestellt werden, wobei das ausgekoppelte Signal jedoch sonst gleiche Signaleigenschaften wie das übertragene Uplink-oder Downlink-Signal aufweist.

Erfindungsgemäß umfasst die Schaltungsanordnung mindestens ein Mittel zur Bereitstellung eines Referenzsignals mit einstellbarer Frequenz. Durch dieses Mittel kann also ein Signal mit einer gewünschten Frequenz bereitgestellt werden. Die Frequenz kann hierbei beispielsweise durch eine Steuereinrichtung der Schaltungsanordnung eingestellt werden. Die Steuereinrichtung kann hierbei durch eine Steuer-und Auswerteeinrichtung gebildet sein. Die Steuereinrichtung oder die Steuer-und Auswerteeinrichtung kann hierbei als Mikrocontroller oder als integrierte Schaltung ausgebildet sein oder eine(n) solche(n) umfassen.

Weiter umfasst die Schaltungsanordnung mindestens einen Mischer zur Mischung des ausgekoppelten Signals und des Referenzsignals und mindestens eine Filtereinrichtung zur Tief- oder Bandpassfilterung des gemischten Signals. Durch den Mischer kann ein Ausgangssignal erzeugt werden, welches einen Anteil mit der/den Frequenz(en) des Referenzsignals, einen Anteil mit der/den Frequenz(en) des ausgekoppelten Signals, einen Anteil mit einer Frequenz, die dem Betrag der Differenz zwischen der/den Frequenz(en) des Referenzsignals und der/den Frequenz(en), insbesondere der Trägerfrequenz, des ausgekoppelten Signals entspricht, einen Anteil mit einer Frequenz, die der Summe der/den Frequenz(en) des Referenzsignals und der/den Frequenz(en) , insbesondere der Trägerfrequenz, des ausgekoppelten Signals entspricht, sowie ganzzahlige Vielfache dieser Anteile umfasst.

Insbesondere umfasst das Ausgangssignal des Mischers also einen Differenzanteil mit einer weiteren Frequenz, die gleich dem Betrag der Differenz zwischen der Frequenz des Referenzsignals und der Trägerfrequenz des ausgekoppelten Signals ist. Es ist weiter möglich, dass das Ausgangssignal weitere Signalanteile mit weiteren Frequenzen umfasst, insbesondere einen sogenannten Frequenzgemischanteil.

Die Filtereinrichtung kann insbesondere ein Tiefpassfilter oder Bandpassfilter sein. Wie nachfolgend noch näher erläutert kann/können die Grenzfrequenz(en) des Tiefpassfilters oder des Bandpassfilters einstellbar sein. Beispielsweise kann die Grenzfrequenz oder können die Grenzfrequenzen durch die erläuterte Steuereinrichtung eingestellt werden. Durch die Einstellung der Grenzfrequenz kann insbesondere erreicht werden, dass der erläuterte Differenzteil aus dem Ausgangssignal des Mischers herausgefiltert wird, der dann für die nachfolgende Analyse verwendet wird.

Die Filtereinrichtung kann insbesondere eine programmierbare Filtereinrichtung sein. Insbesondere kann die Filtereinrichtung auch eine digitale Filtereinrichtung, z.B. ein digitaler Tiefpassfilter oder ein digitaler Bandpassfilter sein.

Weiter umfasst die Schaltungsanordnung mindestens eine Auswerteeinrichtung zur Auswertung des gefilterten Signals. Die Auswerteeinrichtung kann durch die vorhergehend erläuterte Steuer-und Auswerteeinrichtung gebildet sein. Entsprechend der Ausbildung der Steuereinrichtung kann auch die Auswerteeinrichtung als Mikrocontroller oder als integrierte Schaltung ausgebildet sein oder eine(n) solche(n) umfassen.

Durch die Auswerteeinrichtung kann mindestens eine Signaleigenschaft des gefilterten Signals ausgewertet werden. Hierbei ist es möglich, dass diese mindestens eine Signaleigenschaft durch die Auswerteeinrichtung bestimmt wird. Die mindestens eine Signaleigenschaft kann insbesondere eine Signalleistung sein. Eine Signalleistung kann insbesondere durch einen Signalpegel repräsentiert sein. Es ist möglich, dass die Signaleigenschaft für eine vorbestimmte Zeitdauer, beispielsweise für 50 µs, bestimmt wird. Die vorbestimmte Zeitdauer kann hierbei abhängig von der Anzahl der zu untersuchenden Frequenzbänder und der Zeitdauer eines Signalbursts, während der die gewünschte Identifikation des Frequenzbands bzw. des Kanals erfolgen kann. Die Zeitdauer kann in einem Bereich von 10 µs bis 100 µs, vorzugsweise in einem Bereich von 20 µs bis 50 µs, liegen. Anwendungsabhängig kann die Zeitdauer aber auch im Bereich von einer bis mehreren ms, beispielsweise bei bis zu 10 ms, liegen.

Beispielsweise ist es möglich, dass die Signaleigenschaft mit vorbestimmten Schwellwerten verglichen wird. Selbstverständlich sind jedoch auch andere Formen der Auswertung vorstellbar.

Weiter ist, insbesondere mittels der Auswerteeinrichtung, in Abhängigkeit der eingestellten Frequenz des Referenzsignals und der mindestens einen Signaleigenschaft des gefilterten Signals mindestens ein Frequenzband oder mindestens ein Kanal identifizierbar, in dem das übertragene Signal übertragen wird. Es ist hierbei vorstellbar, dass genau ein Frequenzband bzw. genau ein Kanal identifiziert wird. Allerdings ist es auch möglich, dass mehrere Frequenzbänder bzw. mehrere Kanäle identifiziert werden, in denen jeweils ein Signal übertragen wird.

Ein Frequenzband kann hierbei mehrere Kanäle umfassen. Ein Kanal bezeichnet hierbei ein Unterband des Frequenzbandes, welches nur einen Teil der Frequenzen des Frequenzbandes umfasst. Es ist möglich, dass mehrere Signale gleichzeitig über verschiedene Kanäle eines Frequenzbandes übertragen werden, was auch als Intra-Band-Carrier-Aggregation bezeichnet werden kann.

Einem Frequenzband oder einem Kanal kann hierbei jeweils genau eine Trägerfrequenz zugeordnet sein, beispielsweise eine Mittenfrequenz des Frequenzbandes/des Kanals. Auch können einem Frequenzband oder einem Kanal eine Trägerfrequenz und mehrere Unterträgerfrequenzen zugeordnet sein.

Ist beispielsweise die Signalleistung des gefilterten Signals größer als ein vorbestimmter Schwellwert, so kann identifiziert werden, dass das Signal in einem Frequenzband oder Kanal übertragen wird, welches/r die Frequenz des Referenzsignals umfasst oder dessen Frequenzen, insbesondere dessen Trägerfrequenz, nicht mehr als ein vorbestimmtes Maß von dieser Frequenz abweicht/en.

Eine Grenzfrequenz des Tiefpassfilters oder Grenzfrequenzen des Bandpassfilters, die die Bandbreite des Bandpassfilters festlegen, kann/können insbesondere derart gewählt sein, dass Anteile des gemischten Signals, deren Frequenz höher als ein vorbestimmtes Maß ist, reduziert werden.

Insbesondere kann die Grenzfrequenz derart gewählt werden, dass der vorhergehend erläuterte Summenanteil gedämpft wird, insbesondere mit einer gewünschten Dämpfung. Mit anderen Worten kann so der Summenanteil aus dem gemischten Signal herausgefiltert werden.

Weiter kann die Grenzfrequenz derart gewählt werden, dass Signalanteile des Differenzanteils mit Frequenzen, die größer als das vorbestimmte Maß sind, gedämpft werden, insbesondere mit einer gewünschten Dämpfung.

Dies kann dazu führen, dass der Differenzanteil gedämpft wird, wenn ein Betrag der Differenz zwischen der Frequenz des Referenzsignals und der (Träger)Frequenz des ausgekoppelten Signals größer als ein vorbestimmtes Maß ist. Der Differenzanteil wird nicht oder nicht mehr als ein vorbestimmtes Maß durch die Filtereinrichtung gedämpft, wenn der Betrag der Differenz zwischen der Frequenz des Referenzsignals und der (Träger)Frequenz des ausgekoppelten Signals kleiner als ein vorbestimmtes Maß oder gleich dem vorbestimmten Maß ist. Dies kann insbesondere dazu führen, dass eine Signalleistung eines Differenzanteils nur dann größer als ein vorbestimmter Schwellwert ist, wenn die Frequenz des Referenzsignals der Frequenz, insbesondere der Trägerfrequenz, des übertragenen Signals entspricht oder nicht mehr als das vorbestimmte Maß von der Frequenz des übertragenen Signals abweicht.

Mit anderen Worten wird ein derart ungedämpftes oder wenig gedämpftes Ausgangssignal von der Filtereinrichtung nur dann bereitgestellt, wenn die Abweichung zwischen der Frequenz des Referenzsignals und der (Träger)Frequenz des ausgekoppelten Signals kleiner als das vorbestimmte Maß ist.

Es ist zum Beispiel möglich, dass verschiedenen zu identifizierenden Frequenzbändern oder Kanälen genau eine oder mehrere einstellbare Frequenz(en) des Referenzsignals zugeordnet sind. Wird für diese einstellbare Frequenz oder eine dieser einstellbaren Frequenzen detektiert, dass die Signaleigenschaft ein bestimmtes Kriterium erfüllt, beispielsweise eine Signalleistung größer als ein vorbestimmter Schwellwert ist, so kann das dieser einstellbaren Frequenz zugeordnete Frequenzband als das Frequenzband oder der dieser einstellbaren Frequenz zugeordnete Kanal als der Kanal identifiziert werden, indem das übertragene Signal übertragen wird.

Es ist selbstverständlich vorstellbar, dass nach der Identifizierung eines Frequenzbandes oder Kanals, in dem ein Signal übertragen wird, eine erneute Identifizierung eines weiteren Frequenzbandes oder weiteren Kanals, in dem ein weiteres Signal übertragen wird, gestartet wird. Hierdurch können in vorteilhafter Weise verschiedene Frequenzbänder, die bei einer Inter-Band-Carrier-Aggregation genutzt werden, identifiziert werden.

Die Gesamtheit aus der Einrichtung zur Bereitstellung eines Referenzsignals, des Mischers, der Filtereinrichtung sowie der Auswerteeinrichtung kann auch als universeller Detektor bezeichnet werden. Dieser führt vorzugsweise ein Verfahren gemäß dem Prinzip des Direct Conversion Receivers durch. Durch dieses Verfahren erfolgt eine "zu Null-Mischung" des Referenzsignals und des ausgekoppelten Signals, wobei als Mischprodukt die Differenz beider Signale verwendet wird. Ein zu Null gemischtes Signal wird insbesondere dann gebildet, wenn das Referenzsignal und ein Carrier-Anteil (Anteil mit der Carrier-Frequenz) des ausgekoppelten Signals die gleiche Frequenz haben. In diesem Fall ergibt die Frequenzmischung von VCO-Signal und Carrier-Anteil ein Ausgangssignal mit der Frequenz Null. Seitenbänder, insbesondere ein oberes Seitenband, des ausgekoppelten Signals wird durch die Mischung in das Basisband konvertiert. Das ausgekoppelte Signal ist hierbei ein moduliertes Signal mit einem Carrier-Anteil, einem Basisband und weiteren Seitenbändern höherer Ordnung.

Das Ausgangssignal des Mischers enthält in der Regel ist eine Vielzahl von Mischprodukten, wie z.B. Summenfrequenzen des Referenzsignals und des ausgekoppelten Signals, Oberwellen beider Signale und Differenz- und Summenfrequenzen höherer Ordnung. Durch die Filtereinrichtung können dann Frequenzen des Basisbands des ausgekoppelten Signals einfach von den weiteren Anteilen des Ausgangssignals getrennt werden. Hierzu wird vorzugsweise die Differenzfrequenz erster Ordnung bzw. die höchste Frequenz des Basisbands des ausgekoppelten Signals als Grenzfrequenz der Filtereinrichtung verwendet, wodurch die erläuterten weiteren Anteile des Ausgangssignals des Mischers, die alle höhere Frequenzanteile besitzen, aus dem Ausgangssignal herausgefiltert werden können.

Ist, wie nachfolgend noch näher erläutert, die Grenzfrequenz programmierbar, so kann diese in der Anwendung so gewählt werden, dass innerhalb eines Mobilfunkfrequenzbandes die Kanalbandbreite des übertragenen Signals bestimmt werden kann. Es ist auch möglich mehrere übertragene Signale und deren Kanalbandbreite innerhalb eines Frequenzbandes (Intra-Band) zu bestimmen. Eine solche Detektion mehrerer Signale ist insbesondere bei einer Carrier-Aggregation im Uplink- und Downlink-Frequenzbereich wünschenswert.

Durch das vorgeschlagene Verfahren ergibt sich in vorteilhafter Weise eine zuverlässige und zeitlich schnelle Identifizierung eines Frequenzbandes oder Kanals, in dem ein Signal übertragen wird. Diese Information kann zum Beispiel genutzt werden, um frequenzbandspezifische oder kanalspezifische Verstärkereinrichtungen zu aktivieren. Auch kann diese Information genutzt werden, um Schalteinrichtungen zur Herstellung von Signalpfaden zwischen der endgeräteseitigen Schnittstelle und der antennenseitigen Schnittstelle zu steuern, insbesondere um einen gewünschten Signalpfad zu Übertragung einzustellen.

Weiter ergibt sich in vorteilhafter Weise eine verbesserte Identifizierung eines Signals in einem Szenario, in dem gleichzeitig ein Signal gemäß einem TOD-Verfahren als auch ein Signal gemäß einem FDD-Verfahren übertragen wird, da gemäß dieser Verfahren übertragene Signale gleichzeitig in gleichen Frequenzbändern übertragen werden können. Die kanalgenaue Identifikation ermöglicht hierbei in vorteilhafter Weise eine signalartgenaue Identifikation.

Weiter ergibt sich in vorteilhafter Weise, dass bei einer Intraband-Carrier-Aggregation, die Signalleistung in jedem einzelnen Kanal, in dem ein Signal übertragen wird, bestimmt werden kann, wodurch einerseits eine genaue Identifikation des Kanals als auch - wie nachfolgend noch näher erläutert - ein späteres Überwachen des Kanals ermöglicht wird. Insbesondere bei der genannten Intraband-Carrier-Aggregation können außerdem die in verschiedenen Kanälen eines einzelnen Frequenzbands übertragenen Signalleistungen zuverlässig bestimmt werden. Dies ist insbesondere dann von Vorteil, wenn eines der Signale im Frequenzband zu einer weit entfernten Basisstation und ein weiteres Signal im gleichen Frequenzband zu einer nicht so weit entfernten Basisstation übertragen wird, wodurch die Leistungen unterschiedlich hoch sein können.

Ferner ergibt sich in vorteilhafter Weise eine einfache Adaption der Schaltungsanordnung auf die in verschiedenen Ländern verwendeten Standards. Hierzu können einfacher Weise länderspezifisch einzustellende Frequenzen des Referenzsignals und Grenzfrequenz in der Filtereinrichtung durch die Steuer-und Auswerteeinrichtung eingestellt werden. Diese können beispielsweise gespeichert sein, z.B. in einer Speichereinrichtung der Steuer- und Auswerteeinrichtung oder eine mit der Steuer- und Auswerteeinrichtung verbundenen/verbindbaren Speichereinrichtung.

Weiter ergibt sich in vorteilhafter Weise, dass die Schaltungsanordnung adaptiv ausgestaltet sein kann. So kann beispielsweise beim Betreiben der Schaltungsanordnung die Häufigkeit einer Frequenzband-, oder Kanalnutzung von bestimmten Frequenzbändern oder Kanälen zur Signalübertragung bestimmt werden, wobei dann bei Beginn einer Frequenzband- oder Kanalidentifikation zuerst die Frequenzbänder oder die Kanäle auf ein übertragenes Signal hin untersucht werden, die am häufigsten verwendet werden. Hierdurch kann beispielsweise der Betrieb der Schaltungsanordnung an ein bestimmtes Endgerät angepasst werden, wodurch sich die Zeitdauer zur Herstellung einer gewünschten Signalübertragungsqualität verringert.

Weiter ergibt sich in vorteilhafter Weise, dass ein Detektor zur Bestimmung der Signaleigenschaft nur für den Betrieb in einem vorbestimmten Bandbereich und somit nicht über einen großen, insbesondere den gesamten Bandbereich, ausgelegt werden muss. Dies verringert in vorteilhafter Weise Kosten bei der Herstellung der Schaltungsanordnung.

In einer weiteren Ausführungsform umfasst die Schaltungsanordnung eine Einrichtung zur Bestimmung einer Signalleistung des gefilterten Signals. Diese kann auch als Power-Detektor bezeichnet werden. Die Signalleistung kann hierbei die auszuwertende Signaleigenschaft oder eine der auszuwertenden Signaleigenschaften bilden und insbesondere durch einen Signalpegel repräsentiert sein. Die Einrichtung zur Bestimmung der Signalleistung kann insbesondere einen Gleichrichter oder einen Gleichrichter sowie einen Komparator umfassen. Es ist möglich, dass durch die Einrichtung ein Ausgangssignal, insbesondere ein Spannungssignal, erzeugt wird, dessen Amplitude die Signalleistung/den Signalpegel repräsentiert. Dies kann insbesondere kennlinienbasiert erfolgen, wobei die Einrichtung eine einrichtungsspezifische Eingangsleistung-Ausgangsspannung-Kennlinie aufweist. Ein analoges Ausgangssignal kann selbstverständlich digitalisiert werden, z.B. durch einen A/D-Wandler. Hierdurch ergibt sich in vorteilhafter Weise eine einfache und zuverlässige Bestimmung einer Signaleigenschaft und somit eine einfache und zuverlässige Identifizierung des Frequenzbandes.

In einer weiteren Ausführungsform ist eine Grenzfrequenz der Filtereinrichtung einstellbar, insbesondere durch die vorhergehend erläuterte Steuereinrichtung. Ist die Filtereinrichtung ein Bandpassfilter, so kann insbesondere die untere und obere Grenzfrequenz und somit die Bandbreite und die Mittenfrequenz des Bandpasses einstellbar sein. Beispielsweise kann eine Bandbreite des Bandpassfilters, also eine Breite des Frequenzbereichs zwischen der unteren und der oberen Grenzfrequenz, 10 MHz betragen. Insbesondere können die Grenzfrequenzen des Bandpassfilters derart gewählt werden, dass diese einen Frequenzbereich einschließen, der den vorhergehend erläuterten Differenzanteil, aber keine weiteren Anteile des Ausgangssignals des Mischers enthält. Wird die Mittenfrequenz und die Bandbreite eines Bandpassfilters vorgegeben, so kann die Referenzfrequenz dann derart gewählt werden, dass der gewünschte Differenzanteil aus dem Ausgangssignals des Mischers herausgefiltert wird.

Durch die Einstellung der Grenzfrequenz kann in vorteilhafter Weise die Genauigkeit der Bestimmung der (Träger)Frequenz des ausgekoppelten Signals eingestellt werden. Je geringer die Grenzfrequenz, desto geringer darf die Abweichung zwischen der eingestellten Frequenz des Referenzsignals und der (Träger)Frequenz des ausgekoppelten Signals sein, damit der Differenzanteil mit einem Pegel, der höher als der vorbestimmte Schwellwert ist, von der Filtereinrichtung bereitgestellt wird. Mit anderen Worten legt die Grenzfrequenz fest, um wie viel sich die erläuterten Frequenzen unterscheiden können, wenn der Differenzanteil, also das gefiltert Signal, einen Pegel aufweist, der höher als der vorbestimmte Schwellwert ist.

Somit wird insbesondere eine Identifikation des Frequenzbandes mit verschiedenen Sensitivitäten ermöglicht. Wird dann zum Beispiel nachfolgend, eine genauere Bestimmung der (Träger)Frequenz gewünscht, beispielsweise um einen Kanal in einem Frequenzband zu identifizieren, so kann die Grenzfrequenz der Filtereinrichtung reduziert werden, beispielsweise auf einen vorbestimmten Wert.

Ist es gewünscht, einen Kanal zu identifizieren, in dem ein Signal übertragen wird, so kann es erforderlich sein, die Genauigkeit der Bestimmung der (Träger)Frequenz zu erhöhen, wobei dies durch Verringerung der Grenzfrequenz der Filtereinrichtung erfolgen kann. So kann beispielsweise in einem Frequenzband-Identifikationsschritt die Grenzfrequenz der Filtereinrichtung auf einen ersten Wert eingestellt werden. Der erste Wert kann insbesondere derart gewählt werden, dass der Grenzfrequenz der Bandbreite des zu identifizierenden Frequenzbandes entspricht, welches die größte Bandbreite aufweist.

Weiter können in dem Frequenzband-Identifikationsschritt verschiedene Frequenzen des Referenzsignals eingestellt werden, beispielsweise Mittenfrequenzen der Frequenzbänder, in denen ein Signal übertragen werden kann. Eine solche Mittenfrequenz kann hierbei eine dem zu identifizierenden Frequenzband zugeordnete Frequenz sein. Wird für eine dieser eingestellten Frequenzen dann detektiert, dass die Signalleistung des gefilterten Signals größer als der vorbestimmte Schwellwert ist, so kann das Frequenzband, dem die aktuell eingestellte Frequenz des Referenzsignals zugeordnet ist, als Frequenzband identifiziert werden, in dem ein Signal übertragen wird. Weiter kann in einem Kanal-Identifikationsschritt eine Grenzfrequenz der Filtereinrichtung auf einen zweiten Wert eingestellt werden, der geringer als der erste Wert ist, insbesondere geringer als die Bandbreite des identifizierten Frequenzbands. Weiter können in dem Kanal-Identifikationsschritt verschiedene Frequenzen des Referenzsignals eingestellt werden, wobei diese Frequenzen in dem identifizierten Frequenzband liegen. Es ist beispielsweise vorstellbar, dass jedem Kanal in einem Frequenzband genau eine Frequenz, beispielsweise eine Mittenfrequenz, oder mehrere Frequenzen zugeordnet sind. So können dann in den Kanal-Identifikationsschritt diese Frequenzen oder eine Auswahl daraus eingestellt werden. Wird für eine dieser eingestellten Frequenzen dann detektiert, dass die Signalleistung des gefilterten Signals größer als der vorbestimmte Schwellwert ist, so kann der Kanal, dem die aktuell eingestellte Frequenz des Referenzsignals zugeordnet ist, als Kanal identifiziert werden, in dem ein Signal übertragen wird.

Es ist selbstverständlich vorstellbar, dass nach der Identifizierung eines Kanals, in dem ein Signal übertragen wird, eine erneute Identifizierung eines weiteren Frequenzbandes oder eines weiteren Kanals, in dem ein weiteres Signal übertragen wird, gestartet wird. Hierdurch können in vorteilhafter Weise verschiedene Kanäle oder Frequenzbänder, die bei einer Intra- oder Inter-Band-Carrier-Aggregation genutzt werden, identifiziert werden.

Werden zur Identifikation verschiedene Frequenzen des Referenzsignals eingestellt, so können diese für eine vorbestimmte Zeitdauer, z.B. 50 µs, eingestellt werden, bevor dann die nächstfolgende Frequenz eingestellt wird. Die vorbestimmte Zeitdauer kann wie vorhergehend in Bezug auf die Zeitdauer zur Bestimmung der Signaleigenschaft eingestellt werden.

Durch die Einstellbarkeit der Grenzfrequenz ergibt sich in vorteilhafter Weise die Identifikation eines Frequenzbandes oder eines Kanals mit einstellbarer Genauigkeit.

In einer weiteren Ausführungsform umfasst das Mittel zur Bereitstellung des Referenzsignals eine Phasenregelschleife oder ist als solche ausgebildet. Die Phasenregelschleife kann eine elektronische Schaltungsanordnung bezeichnen, die die Phasenlage und damit zusammenhängend die Frequenz eines veränderbaren Oszillators über einen geschlossenen Regelkreis so beeinflusst, dass die Phasenabweichung zwischen einem äußeren Referenzsignal und dem Oszillator oder einem daraus abgeleiteten Signal möglichst konstant ist. Der Aufbau einer Phasenregelschleife ist dem Fachmann bekannt. Insbesondere kann die Phasenregelschleife einen Phasenkomparator, ein Schleifenfilter und einen steuerbaren Oszillator umfassen. Weiter kann die Phasenregelschleife einen oder mehrere Frequenzteiler umfassen. Ein Eingangssignal der Phasenregelschleife kann insbesondere ein sinusförmiges Signal mit einer vorbestimmten Frequenz oder ein durch einen Frequenzteiler mit einem vorbestimmten Teilerfaktor geteiltes sinusförmiges Signal sein. Das sinusförmige Signal kann hierbei von einer entsprechenden Erzeugungseinrichtung, beispielsweise einem Oszillator, insbesondere einem Quarz-Oszillator, erzeugt werden. Beispielsweise kann die Steuereinrichtung eine solche Erzeugungseinrichtung umfassen.

Weiter kann auch ein Teilerfaktor des Frequenzteilers für das sinusförmige Signal durch die Steuereinrichtung eingestellt werden. Weiter kann auch ein Teilerfaktor eines Frequenzteilers für ein rückgekoppeltes Ausgangssignal des steuerbaren Oszillators durch die Steuereinrichtung eingestellt werden. Somit kann insbesondere durch die Einstellung der Teilerfaktoren eine gewünschte Frequenz des Referenzsignals, welches dem Ausgangssignal des steuerbaren Oszillators entspricht, eingestellt werden.

Hierdurch ergibt sich in vorteilhafter Weise eine einfach implementierbare und zuverlässige sowie genaue Erzeugung des Referenzsignals.

In einer weiteren Ausführungsform umfasst die Schaltungsanordnung mindestens eine Steuereinrichtung zur Einstellung der Frequenz des Referenzsignals und/oder zur Einstellung der Grenzfrequenz der Filtereinrichtung. Dies und entsprechende Vorteile wurden vorhergehend bereits erläutert.

In einer weiteren Ausführungsform umfasst die Schaltungsanordnung mindestens eine Einrichtung zur Signalübertragungsdetektion. Mittels der Einrichtung zur Signalübertragungsdetektion kann detektiert werden, ob eine oder mehrere Uplink- oder Downlink-Signale, über die Schaltungsanordnung übertragen wird/werden. Die Einrichtung zur Signalübertragungsdetektion kann signaltechnisch mit einem Signalpfad zur Übertragung eines Uplink- und/oder Downlink-Signals gekoppelt sein, insbesondere über einen weiteren Signalkoppler der Schaltungsanordnung. Alternativ ist es jedoch auch möglich, eine galvanische Verbindung zwischen dem Signalpfad und der Einrichtung zur Signalübertragungsdetektion bereitzustellen.

Die Einrichtung zur Signalübertragungsdetektion kann insbesondere eine bandunspezifische Detektion einer Signalübertragung durchführen. Mit anderen Worten kann detektiert werden, ob ein Signal über die Schaltungsanordnung übertragen wird, wobei jedoch kein Frequenzband diese Übertragung berücksichtigt wird.

Wird durch die Einrichtung zur Signalübertragungsdetektion detektiert, dass ein Signal über die Schaltungsanordnung übertragen wird, so kann die Identifizierung des Frequenzbands oder des Kanals gestartet werden, in dem das Signal übertragen wird. Insbesondere kann die Einrichtung zur Signalübertragungsdetektion ein Startsignal zum Starten dieser Identifizierung erzeugen. Die Einrichtung zur Signalübertragungsdetektion kann zumindest teilweise durch die Auswerteeinrichtung gebildet sein. Weiter kann diese Einrichtung zumindest einen Gleichrichter oder einen Gleichrichter sowie zumindest einen Komparator umfassen.

Hierdurch ergibt sich in vorteilhafter Weise, dass eine Identifizierung nur dann erfolgt, wenn tatsächlich ein Signal über die Schaltungsanordnung übertragen wird. Hierdurch kann ein Energieverbrauch und die bereitzustellende Rechenleistung der Schaltungsanordnung reduziert werden.

In einer weiteren Ausführungsform umfasst die Schaltungsanordnung mindestens ein Schaltelement. Dieses Schaltelement kann als Schalter, z.B. als SPDT (Single Pole Double Through)-Schaltelement, ausgebildet sein. In einem ersten Schaltzustand des Schaltelements ist ein erster Anschluss des Signalkopplers mit dem Mischer und in einem weiteren Schaltzustand des Schaltelements ein weiterer Anschluss des Signalkopplers mit dem Mischer, insbesondere dem Eingangsanschluss des Mischers, verbunden. Hierdurch kann in vorteilhafter Weise in einfacher und zuverlässiger Weise bestimmt werden, ob ein Uplink- oder ein Downlink-Signal über die Schaltungsanordnung übertragen wird.

Es ist möglich, dass die verschiedenen Anschlüsse des Signalkopplers gegeneinander um mehr als ein vorbestimmtes Maß isoliert sind. Wird zum Beispiel ein Uplink-Signal über einen Signalpfad der Schaltungsanordnung übertragen und durch den Signalkoppler aus diesem ausgekoppelt, so kann die Signalleistung des am ersten Anschluss des Signalkopplers bereitgestellten, ausgekoppelten Signals größer als die Signalleistung des am weiteren Anschluss bereitgestellten Signals sein. Wird ein Downlink-Signal über den Signalpfad übertragen, so kann entsprechend die Signalleistung des am weiteren Anschluss bereitgestellten Signals größer als die Signalleistung des am ersten Anschluss bereitgestellten Signals sein.

Beispielsweise kann durch Änderung des Schaltzustands detektiert werden, ob ein Uplink-oder Downlink-Signal übertragen wird. Wird zum Beispiel eine Signalleistung des gefilterten Signals detektiert, die größer als ein vorbestimmter Schwellwert ist, so kann dann ein Schaltzustand des Schaltelements geändert werden. Je nach dem Ausgangs-Schaltzustand kann dann ein Uplink-Signal detektiert werden, wenn sich die Signalleistung des gefilterten Signals erhöht oder erniedrigt. Ein Downlink-Signal kann detektiert werden, wenn sich die Signalleistung des gefilterten Signals erniedrigt bzw. erhöht. Diese Detektion kann hierbei zeitlich vor aber auch während einem Band-Identifikationsschritt durchgeführt werden.

Weiter kann die (weitere) Identifizierung des Frequenzbandes oder eines Kanals, in dem das Signal übertragen wird, in Abhängigkeit der Information, ob ein Uplink-Signal oder ein Downlink-Signal übertragen wird, durchgeführt werden. So können beispielsweise, wenn ein Uplink-Signal detektiert wurde, die Frequenzen des Referenzsignals im Band-Identifikationsschritt oder im Kanal-Identifikationsschritt auf Frequenzen eingestellt werden, die Frequenzbändern bzw. Kanälen zur Übertragung von Uplink-Signalen zugeordnet sind. Entsprechend können, wenn ein Downlink-Signal detektiert wurde, die Frequenzen des Referenzsignals im Band-Identifikationsschritt oder im Kanal-Identifikationsschritt auf Frequenzen eingestellt werden, die Frequenzbändern oder Kanälen zur Übertragung von Downlink-Signalen zugeordnet sind.

Hierdurch ergibt sich in vorteilhafter Weise eine zeitlich schnellere Identifikation eines Frequenzbandes oder eines Kanals, in dem ein Signal übertragen wird.

In einer weiteren Ausführungsform umfasst die Schaltungsanordnung eine Bypass-Einrichtung, wobei ein Signal zwischen dem Signalkoppler und dem Mischer über die Bypass-Einrichtung übertragen wird. Die Bypass-Einrichtung kann ein Bypass-Schaltelement, welches z.B. als Schalter ausgebildet sein kann, umfassen. In einem ersten Schaltzustand dieses Schaltelements kann das Signal ungedämpft oder unverstärkt übertragen werden. In einem weiteren Schaltzustand kann das Signal mit einer vorbestimmten, insbesondere auch einstellbaren, Verstärkung oder Dämpfung übertragen werden. In diesem Fall kann die Bypass-Einrichtung eine entsprechende Verstärker- oder Dämpfereinrichtung umfassen.

Hierdurch kann in vorteilhafter Weise eine Zuverlässigkeit der Identifizierung erhöht werden, nämlich insbesondere durch eine Verstärkung schwacher ausgekoppelten Signale. Auch kann in vorteilhafter Weise eine Betriebssicherheit bei der Identifizierung erhöht werden, nämlich insbesondere durch eine Dämpfung zu starker ausgekoppelter Signale. Insbesondere dient eine Verstärkung durch die Verstärker- oder Dämpfereinrichtung der Bypass-Einrichtung einer Erweiterung der Spannungs-Leistungscharakteristik der erläuterten Einrichtung zur Bestimmung der Signalleistung des gefilterten Signals. Eine solche Erweiterung kann insbesondere aufgrund der Dynamik der Sendesignale notwendig sein, um verschiedene Pegelbereiche zuverlässig zu verarbeiten zu können.

In einer weiteren Ausführungsform ist in Abhängigkeit der eingestellten Frequenz und der mindestens einen Signaleigenschaft zusätzlich mindestens ein Kanal identifizierbar, in dem das übertragene Signal übertragen wird. Dies und entsprechende Vorteile wurden vorhergehend bereits erläutert.

In einer weiteren Ausführungsform ist der Kanal zusätzlich in Abhängigkeit der eingestellten Grenzfrequenz identifizierbar. Dies und entsprechende Vorteile wurden vorhergehend bereits erläutert.

In einer weiteren Ausführungsform ist eine Kanalbandbreite des Kanals in Abhängigkeit mehrerer eingestellter Frequenzen und der mindestens einen Signaleigenschaft bestimmbar. Dies und entsprechende Vorteile werden nachfolgend noch näher erläutert.

Weiter vorgeschlagen wird ein Verfahren zur Identifizierung eines Frequenzbandes, in dem ein Uplink- oder Downlink-Signal übertragen wird, wobei ein ausgekoppeltes Uplink- oder Downlink-Signals bereitgestellt wird bzw. das entsprechende Signal ausgekoppelt wird. Das Signal kann hierbei insbesondere aus einem Signalpfad der Schaltungsanordnung ausgekoppelt werden. Weiter wird mindestens ein Referenzsignal mit einer vorbestimmten Frequenz bereitgestellt, insbesondere mittels der Einrichtung zur Bereitstellung eines Referenzsignals. Weiter werden das ausgekoppelte Signal und das Referenzsignal gemischt, insbesondere durch den Mischer. Weiter wird das gemischte Signal gefiltert, insbesondere durch die Filtereinrichtung. Weiter wird mindestens eine Signaleigenschaft des gefilterten Signals bestimmt, insbesondere mittels der Auswerteeinrichtung oder einer Einrichtung zur Bestimmung einer Signaleigenschaft. Insbesondere kann ein Pegel des gefilterten Signals bestimmt werden. Weiter wird in Abhängigkeit der Frequenz des Referenzsignals und der mindestens einen Signaleigenschaft des gefilterten Signals ein Frequenzband oder ein Kanal identifiziert, in dem das übertragenen Signals übertragen wird.

Das Verfahren kann hierbei mit einer Vorrichtung gemäß einer der in dieser Offenbarung offenbarten Ausführungsformen durchgeführt werden. Somit ist die Vorrichtung insbesondere derart konfiguriert, dass ein Verfahren gemäß einer der in dieser Offenbarung beschriebenen Ausführungsformen mit der Vorrichtung durchführbar ist.

Beispielsweise kann eine Signalleistung des gefilterten Signals bestimmt werden und das Frequenzband, dem die eingestellte Frequenz des Referenzsignals zugeordnet ist, als Frequenzband identifiziert werden, indem das Signal übertragen wird.

Es ist möglich, dass in dem Verfahren zeitlich nacheinander verschiedene Frequenzen des Referenzsignals eingestellt werden, insbesondere in dem die Einrichtung zur Erzeugung des Referenzsignals entsprechend betrieben/gesteuert wird. Hierbei ist es insbesondere möglich, dass verschiedene Frequenzen des Referenzsignals derart eingestellt werden, dass diese immer mehr als oder genau um ein vorbestimmtes Mindestmaß voneinander abweichen, wobei das Mindestmaß beispielsweise 200 kHz betragen kann. Für jede dieser eingestellten Frequenzen kann dann die Signalleistung des gefilterten Signals bestimmt werden, wobei nur dann ein Frequenzband identifiziert wird, in dem ein Signal übertragen wird, wenn die Signaleigenschaft für eine diesem Frequenzband zugeordnete, eingestellte Frequenz des Referenzsignals ein vorbestimmtes Kriterium erfüllt, beispielsweise die Signalleistung für eine diesem Frequenzband zugeordnete, eingestellte Frequenz des Referenzsignals größer als ein vorbestimmter Schwellwert ist. Selbstverständlich ist es denkbar, dass mehrere Frequenzbänder, in denen jeweils Signale übertragen werden, identifiziert werden. Hierzu kann beispielsweise das Verfahren nach der Identifikation eines Frequenzbandes erneut gestartet werden, wobei dann jedoch andere Frequenzen des Referenzsignals eingestellt werden.

Hierbei kann eine Zuordnung, insbesondere eine vorbestimmte Zuordnung, zwischen einstellbaren Frequenzen des Referenzsignals und Frequenzbändern existieren, die zur Identifizierung genutzt wird. Auch kann eine Zuordnung zwischen einstellbaren Frequenzen des Referenzsignals und Kanälen der Frequenzbänder existieren, die, wie nachfolgend noch näher erläutert zur Identifizierung eines Kanals genutzt werden kann. Wurde ein Frequenzband oder ein Kanal identifiziert, in dem ein Signal übertragen wird, so kann die entsprechend eingestellte Frequenz des Referenzsignals und gegebenenfalls auch die detektierte Signalleistung gespeichert werden, beispielsweise in einer Speichereinrichtung. Die Speichereinrichtung kann hierbei eine Speichereinrichtung der Steuer-und Auswerteeinrichtung sein. Hierdurch wird ermöglicht, dass für eine spätere Prüfung bzw. Überwachung, ob weiterhin ein Signal in dem Frequenzband oder Kanal übertragen wird, in einfacher Weise die entsprechend gespeicherte Frequenz des Referenzsignals abgerufen und eingestellt werden kann.

In einer weiteren Ausführungsform werden frequenzbereichs- oder kanalspezifische Referenzsignale mit verschiedenen Frequenzen erzeugt, wobei die Referenzsignale jeweils mit dem ausgekoppelten Signal gemischt, die gemischten Signale gefiltert und mindestens eine Signaleigenschaft der gemischten Signale bestimmt wird, wobei das Frequenzband oder der Kanal in Abhängigkeit der frequenzbereichs- oder kanalspezifischen Signaleigenschaften bestimmt wird. Dies und entsprechende Vorteile wurden vorhergehend bereits erläutert.

In einer weiteren Ausführungsform wird mindestens eine Grenzfrequenz der Filtereinrichtung verändert. Dies und entsprechende Vorteile wurden vorhergehend bereits erläutert.

Es ist beispielsweise möglich, dass sowohl die Frequenz des Referenzsignals als auch die Grenzfrequenz geändert wird. Beispielsweise kann die Grenzfrequenz auf eine frequenzbandspezifische Grenzfrequenz eingestellt werden, wenn eine Frequenz des Referenzsignals eingestellt wird, die diesem Frequenzband zugeordnet ist. Hierfür kann eine vorbekannte Zuordnung zwischen einem Frequenzband und einer Grenzfrequenz existieren.

Insbesondere kann die Grenzfrequenz verändert, weiter insbesondere verringert werden, wenn ein Frequenzband identifiziert wurde und nachfolgend eine Kanalidentifikation eines Kanals des identifizierten Frequenzbands erfolgt, wobei das identifizierte Frequenzband mehrere Kanäle umfasst. Auch bei der Kanalidentifikation können vorbestimmte Frequenzen, insbesondere kanalspezifische Frequenzen, des Referenzsignals eingestellt werden. Weiter können vorbestimmte Grenzfrequenzen, beispielsweise kanalspezifische Grenzfrequenzen, eingestellt werden. Wurde beispielsweise ein Frequenzband identifiziert, indem ein Signal übertragen wird, so kann nachfolgend die Frequenz des Referenzsignals zur Kanalidentifikation nur auf Frequenzen dieses Frequenzbandes eingestellt werden. Wie vorhergehend erläutert, können diese zur Kanalidentifikation eingestellten Frequenzen um ein vorbestimmtes Mindestmaß oder um mehr als dieses vorbestimmte Mindestmaß voneinander abweichen.

Weiter ist es vorstellbar, dass zur Kanalidentifikation mehrere Durchläufe des Verfahrens durchgeführt werden, wobei in aufeinanderfolgenden Durchläufen das vorhergehend erläuterte Mindestmaß reduziert und/oder die Grenzfrequenz reduziert wird.

Auch kann die Menge von einzustellenden Frequenzen des Referenzsignals in einem Durchlauf abhängig von den im vorherigen Durchlauf verwendeten Grenzfrequenzen bestimmt werden. Beispielsweise können Frequenzen in einem Kanalidentifikations-Durchlauf nur aus einem Bandbereich eingestellt werden, der als Mittenfrequenz die im vorherigen Durchlauf eingestellte Frequenz des Referenzsignals umfasst, für die ein übertragenes Signal detektiert wurde, wobei eine Bandbreite dieses Bandbereichs der Grenzfrequenz im vorherigen Durchlauf entspricht oder hiervon abhängig bestimmt wird.

Insgesamt sind aber verschiedene Strategien zur Einstellung der Frequenzen des Referenzsignals und zur Einstellung der Grenzfrequenz der Filtereinrichtung vorstellbar, um in einer gewünschten Weise ein oder mehrere Frequenzband/Frequenzbänder und/oder ein Kanal oder mehrere Kanäle, in denen ein Signal übertragen wird, zu identifizieren.

In einer weiteren Ausführungsform wird ein Frequenzband identifiziert, wobei folgend ein Kanal dieses Frequenzbands identifiziert wird. Dies und entsprechende Vorteile wurden vorhergehend bereits erläutert.

Insbesondere können zur Identifizierung eines Frequenzbands, in dem ein Signal übertragen wird, Bandidentifikations-Frequenzen und gegebenenfalls dann Bandidentifikations-Grenzfrequenzen der Filtereinrichtung eingestellt werden. Eine Bandidentifikations-Grenzfrequenz kann beispielsweise 60 MHz betragen. Hierbei kann davon ausgegangen werden, dass Frequenzbänder feste und vorbestimmte Bandbreiten aufweisen. Selbstverständlich können jedoch auch andere Grenzfrequenzen eingestellt werden, z.B. in Abhängigkeit Bandbreiten, die sich einer Frequenzbandtabelle des Mobilfunks entnehmen lassen.

Zur Kanalidentifikation können in entsprechender Weise Kanal-Identifikationsfrequenzen und gegebenenfalls Kanalidentifikations-Grenzfrequenzen der Filtereinrichtung eingestellt werden. Eine Kanalidentifikations-Grenzfrequenz kann beispielsweise 200 kHz betragen. Hierbei kann davon ausgegangen werden, dass Kanäle verschiedene Bandbreiten aufweisen können, beispielsweise 1.4 MHz, 5 MHz oder 10 MHz. Selbstverständlich können jedoch auch andere Grenzfrequenzen eingestellt werden, z.B. in Abhängigkeit Bandbreiten, die sich einer Frequenzkanaltabelle des Mobilfunks entnehmen lassen.

Hierbei können die Kanalidentifikations-Frequenzen und gegebenenfalls auch die Kanalidentifikations-Grenzfrequenzen frequenzbandspezifisch sein. Dies kann bedeuten, dass für verschiedene Frequenzbänder, in denen ein Signal übertragen wird, jeweils spezifische, vorbestimmte Kanalidentifikations-Frequenzen und gegebenenfalls verschiedene Kanalidentifikation-Grenzfrequenzen eingestellt werden.

In einer weiteren Ausführungsform wird eine Kanalbandbreite des Kanals identifiziert.

Wurde z.B. ein Frequenzband identifiziert, so kann ein Kanal und/oder eine Kanalbandbreite identifiziert werden, indem sequentiell alle Segmentfrequenzen einer Menge von Segmentfrequenzen aus dem identifizierten Frequenzband und eine Segment-Grenzfrequenz eingestellt werden und für jede eingestellte Segmentfrequenz dann die mindestens eine Signaleigenschaft des gefilterten Signals bestimmt wird. Die Segment-Grenzfrequenz der Filtereinrichtung legt hierbei eine Bandbreite eines Segments fest. Mit anderen Worten kann das Frequenzband in Segmente unterteilt werden, die dann einzeln auf eine Signalübertragung hin geprüft werden. Somit wird also ein segmentiertes oder gequanteltes Frequenzband geprüft. Diese Prüfung kann auch als Rasterprüfung bezeichnet werden.

Insbesondere kann die Segmentfrequenz, ausgehend von der Bandanfangsfrequenz schrittweise bis zur Bandendfrequenz erhöht werden, z.B. um eine vorbestimmte Frequenzschrittweite, wobei in jedem Schritt dann die mindestens eine Signaleigenschaft des gefilterten Signals für das entsprechende Segment bestimmt wird. Die vorbestimmte Frequenzschrittweite kann z.B. 200 kHz betragen. Vorzugsweise entspricht die Segment-Grenzfrequenz der Frequenzschrittweite.

Erfüllt die Signaleigenschaft ein vorbestimmtes Kriterium, ist z.B. die Signalleistung größer als ein vorbestimmter Schwellwert, so kann das entsprechende Segment als ein Segment identifiziert werden, in dem ein Signal übertragen wird. Ist das Kriterium nur für ein einzelnes und keines der benachbarten Segmente erfüllt, so kann der Kanal als dieses Segment und die Kanalbandbreite als Segmentbandbreite identifiziert werden.

Erfüllt die Signaleigenschaft das vorbestimmte Kriterium für mehrere benachbarte Segmente, so kann der Kanal als die Gesamtheit der Segmente und die Kanalbandbreite als Summe aller Segmentbandbreiten dieser benachbarten Segmente identifiziert werden.

Es ist somit auch möglich, dass mehrere Kanäle in dem Frequenzband und mehrere entsprechende Kanalbandbreiten identifiziert werden, z.B. im Fall einer Intraband-Carrier-Aggregation.

Mit anderen Worten kann durch die Einstellung der Segment-Grenzfrequenz einer Tiefpass-Filtereinrichtung oder der Bandbreite sowie der Mittenfrequenz einer Bandpass-Filtereinrichtung die Bandbreite des ausgekoppelten Signals gequantelt, also in Segmente unterteilt, werden. Je kleiner die Segment-Grenzfrequenz, desto genauer kann die Bandbreite des Kanals bestimmt werden. Die kleinste einstellbare Segment-Grenzfrequenz, die z.B. 200 KHz betragen kann, ermöglicht also die genaueste Bestimmung der Bandbreite des Kanals. Bei einer Segment-Grenzfrequenz von 200 kHz bewegt man sich im Kanalraster des Mobilfunks. Andere, insbesondere größere Segment-Grenzfrequenzen, führen zu einer anderen Quantelung und somit zu einer anderen Genauigkeit.

Somit ergibt sich in vorteilhafter Weise eine einfache und zeitlich schnelle Identifikation eines Kanals und/oder einer Kanalbandbreite.

In einer weiteren Ausführungsform wird nach der Identifikation eines Frequenzbands oder eines Kanals, in dem ein Signal übertragen wird, eine Überwachung mindestens einer Signaleigenschaft des übertragenen Signals durchgeführt. Die Überwachung kann auch als Monitoring bezeichnet werden. Diese Signaleigenschaft kann beispielsweise die Signalleistung des entsprechend gefilterten Signals sein. Beispielsweise kann kontinuierlich oder in vorbestimmten Zeitabständen, insbesondere periodisch, als Frequenz des Referenzsignals die Frequenz eingestellt werden, für die das zu überwachende Frequenzband detektiert wurde. Weiter kann die Signalleistung des gefilterten Signals bestimmt werden, wobei eine andauernde Übertragung des Signals detektiert wird, wenn die Signalleistung größer als der oder größer als ein weiterer vorbestimmter Schwellwert ist. Weiter kann eine beendete oder unterbrochene Signalübertragung detektiert werden, falls die Signalleistung geringer als der oder der weitere vorbestimmte Schwellwert ist. Wird zum Beispiel ein beendete oder unterbrochene Signalübertragung detektiert, so können beispielsweise Verstärkereinrichtungen der Schaltungsanordnung entsprechend gesteuert, beispielsweise deaktiviert, werden. Auch können Signalpfade, die zu Übertragung des Signals dienten, unterbrochen werden. Die Überwachung kann auch als Überwachung-Modus bezeichnet werden. Durch die Überwachung ergibt sich in vorteilhafter Weise ein verbesserter Betrieb der Schaltungsanordnung, insbesondere da der Betrieb, beispielsweise der Betrieb von Verstärkereinrichtungen und/oder die Herstellung von Signalpfaden zu Übertragung, an den aktuellen Übertragungszustand angepasst werden können.

Alternativ oder kumulativ wird die Identifizierung eines weiteren Frequenzbands oder eines Kanals oder weiteren Kanals gestartet. Dies kann auch als Scanning-Modus bezeichnet werden.

Durch die Identifizierung eines weiteren Frequenzbands oder eines weiteren Kanals ergibt sich in vorteilhafter Weise, dass ein verbesserter Betrieb der Schaltungsanordnung möglich ist, nämlich eine an die Übertragung mehrerer Signale angepasster Betrieb. Durch die Identifizierung eines Kanals ergibt sich in vorteilhafter Weise eine genauere Bestimmung eines Frequenzbereichs, in dem ein Signal übertragen wird, und somit auch ein daran angepasster Betrieb der Schaltungsanordnung.

In einer weiteren Ausführungsform werden die Überwachung und die Identifizierung eines weiteren Frequenzbands oder (weiteren) Kanals sequenziell oder zeitgleich durchgeführt. Mit anderen Worten kann die Schaltungsanordnung abwechselnd im Überwachung-Modus und im Identifizierung-Modus betrieben werden. Hierdurch ergibt sich in vorteilhafter Weise eine verbesserte Anpassung des Betriebs an den aktuellen Übertragungszustand.

Umfasst die Schaltungsanordnung jedoch geeignete Mittel, um eine Überwachung und eine Identifizierung zeitgleich durchzuführen, z.B. einen - wie nachfolgend noch näher erläutert - Überwachungs- und einen Detektionsabschnitt, so kann die Überwachung und die Identifizierung eines weiteren Frequenzbands oder (weiteren) Kanals auch simultan durchgeführt werden. Hierdurch ergibt sich in vorteilhafter Weise eine zeitlich schnellere Identifikation.

Die Erfindung wird anhand von Ausführungsbeispielen näher erläutert. Die Figuren zeigen:
- Fig. 1: ein schematisches Blockdiagramm einer erfindungsgemäßen Schaltungsanordnung,
- Fig. 2: ein schematisches Blockdiagramm einer erfindungsgemäßen Schaltungsanordnung in einer weiteren Ausführungsform,
- Fig.3: ein schematisches Blockdiagramm einer erfindungsgemäßen Schaltungsanordnung in einer weiteren Ausführungsform,
- Fig. 3a: ein schematisches Blockdiagramm einer erfindungsgemäßen Schaltungsanordnung in einer weiteren Ausführungsform,
- Fig. 4: ein schematisches Blockdiagramm einer Einrichtung zur Erzeugung eines Referenzsignals,
- Fig. 5: eine schematische Darstellung von Frequenzbereichen,
- Fig. 6: eine schematische Darstellung eines Frequenzbereichs mit mehreren Kanälen,
- Fig. 7: ein schematisches Flussdiagramm eines erfindungsgemäßen Verfahrens und
- Fig. 8: ein schematisches Flussdiagramm eines erfindungsgemäßen Verfahrens in einer weiteren Ausführungsform.

Nachfolgend bezeichnen gleiche Bezugszeichenelemente mit gleichen oder ähnlichen technischen Merkmalen.

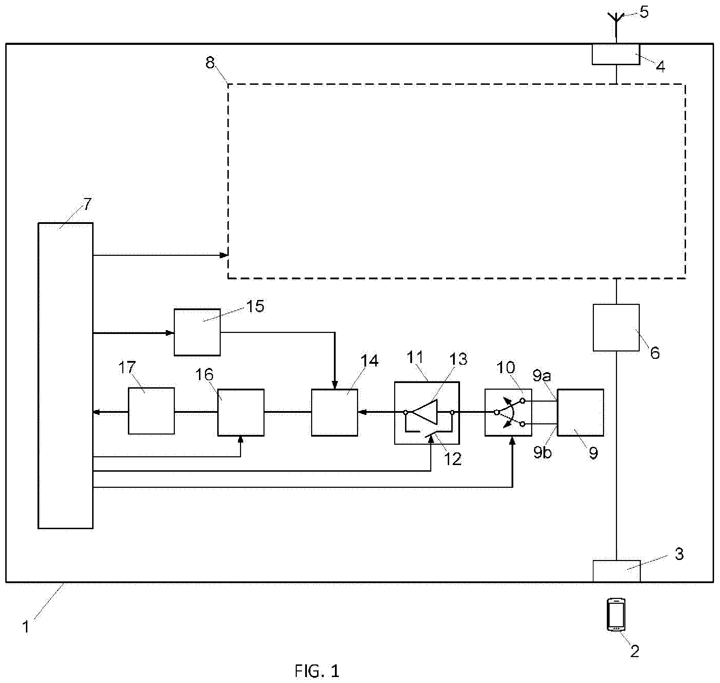

Figur 1 zeigt ein schematisches Blockdiagramm einer erfindungsgemäßen Schaltungsanordnung 1. Dargestellt ist ein Endgerät 2, welches zum Beispiel ein Mobilfunktelefon sein kann. Die Schaltungsanordnung 1 umfasst eine endgeräteseitige Schnittstelle 3, wobei mittels der endgeräteseitigen Schnittstelle 3 Signale zwischen dem Endgerät 2 und der Schaltungsanordnung 1 übertragen werden können. Die endgeräteseitige Schnittstelle 3 kann hierbei einen drahtlosen Koppler umfassen oder ausbilden. Die Schaltungsanordnung 1 umfasst weiter eine antennenseitige Schnittstelle 4, wobei mittels der antennenseitigen Schnittstelle 4 Signale zwischen einer Antenne 5 und der Schaltungsanordnung 1 übertragen werden können.

Insbesondere können sogenannte Uplink-Signale von dem Endgerät 2 über die Schaltungsanordnung 1 zur Antenne 5 übertragen werden. Diese Übertragung kann durch das Endgerät 2 selbst initiiert oder von einer Basisstation angefragt werden. Weiter können sogenannte Downlink-Signale von der Antenne 5 empfangen werden und dann über die Schaltungsanordnung 1 zum Endgerät 2 übertragen werden.

Weiter umfasst die Schaltungsanordnung eine Dämpfungseinrichtung 6. Diese kann vorzugsweise eine Dämpfungseinrichtung 6 mit einstellbarem Dämpfungsfaktor sein. Weiter umfasst die Schaltungsanordnung 1 eine Steuer-und Auswerteeinrichtung 7, die beispielsweise als Mikrocontroller ausgebildet sein kann oder einen solchen umfassen kann.

Schematisch dargestellt ist ein Signalleitungs- und -verarbeitungsabschnitt 8 der Schaltungsanordnung 1. Dieser Abschnitt 8 kann Einrichtungen zur Verstärkung eines über die Schaltungsanordnung 1 übertragenen Signals, Schalteinrichtungen zur Herstellung von Signalpfaden zur Übertragung von Uplink-oder Downlink-Signalen sowie Filtereinrichtungen, insbesondere in Form von Multiplexern, umfassen. Selbstverständlich kann der Abschnitt 8 auch noch weitere Einrichtungen umfassen.

Weiter umfasst die Schaltungsanordnung 1 einen Signalkoppler 9, durch den ein Signal aus einem Signalpfad zwischen der endgeräteseitigen Schnittstelle 3 und der Dämpfereinrichtung 6 ausgekoppelt werden kann. Selbstverständlich ist es möglich, den Signalkoppler 9 auch an anderen Stellen der Schaltungsanordnung 1 anzuordnen und dementsprechend Uplink-oder Downlink-Signale auszukoppeln.

Der Signalkoppler 9 weist einen ersten, antennenseitigen Anschluss 9a und einen zweiten, endgeräteseitigen Anschluss 9b auf. Der Signalkoppler 9 kann insbesondere ein richtungssensitiver Signalkoppler sein. Aufgrund der Richtungssensitivität kann eine Leistung eines Signals, das an einem ersten Anschluss des Signalkopplers, z.B. einem antennenseitigen Anschluss, ausgekoppelt wird, höher sein als die Leistung eines Signals mit gleicher Signalstärke, welches an einem ersten Anschluss des Signalkopplers, z.B. einem antennenseitigen Anschluss, ausgekoppelt wird.

Weiter umfasst die Schaltungsanordnung 1 ein Schaltelement 10, welches als Schalter ausgebildet sein kann. Das Schaltelement 10 kann verschiedene Schaltzustände annehmen. Hierbei sind die Anschlüsse 9a, 9b des Signalkopplers 9 mit verschiedenen Eingangsanschlüssen des Schaltelements 10 verbunden. Ein Ausgangsanschluss des Schaltelements 10 ist mit einem Eingangsanschluss einer Bypass-Einrichtung 11 der Schaltungsanordnung 1 verbunden. Die Bypass-Einrichtung 11 umfasst ein Trennschaltelement 12 und eine Verstärkereinrichtung 13, wobei das Trennschaltelement 12 und die Verstärkereinrichtung 13 parallel geschaltet sind. Nimmt das Trennschaltelement 12 einen geschlossenen Zustand ein, so wird ein Signal unverstärkt von dem Eingangsanschluss der Bypass-Einrichtung 11 zu einem Ausgangsanschluss der Bypass-Einrichtung 11 übertragen. Nimmt das Trennschaltelement 12 einen geöffneten Zustand ein, so wird das zwischen den Anschlüssen der Bypass-Einrichtung 11 übertragene Signal durch die Verstärkereinrichtung 13 verstärkt. Das Trennschaltelement 12 kann als einpoliger Schalter ausgebildet sein, der einen geschlossenen oder einen unterbrochenen Zustand einnehmen kann.

Es ist vorstellbar, dass die Bypass-Einrichtung 11 alternativ zwei Umschaltelemente umfasst, wobei der Ausgangsanschluss der Bypass-Einrichtung 11 über ein erstes Umschaltelement mit einem Ausgangsanschluss der Verstärkereinrichtung 13 und der Eingangsanschluss der Bypass-Einrichtung 11 über ein weiteres Umschaltelement mit dem Eingangsanschluss der Verstärkereinrichtung 13 verbunden ist. Wird ein erster Schaltzustand beider Umschaltelemente eingestellt, so wird ein Signal unverstärkt von dem Eingangsanschluss der Bypass-Einrichtung 11 zu dem Ausgangsanschluss der Bypass-Einrichtung 11 übertragen, nämlich über einen Signalpfad, der parallel zur Verstärkereinrichtung 13 angeordnet ist. Wird ein erster Schaltzustand beider Umschaltelemente eingestellt, so wird ein Signal über die Verstärkereinrichtung 13 von dem Eingangsanschluss der Bypass-Einrichtung 11 zu dem Ausgangsanschluss der Bypass-Einrichtung 11 übertragen.

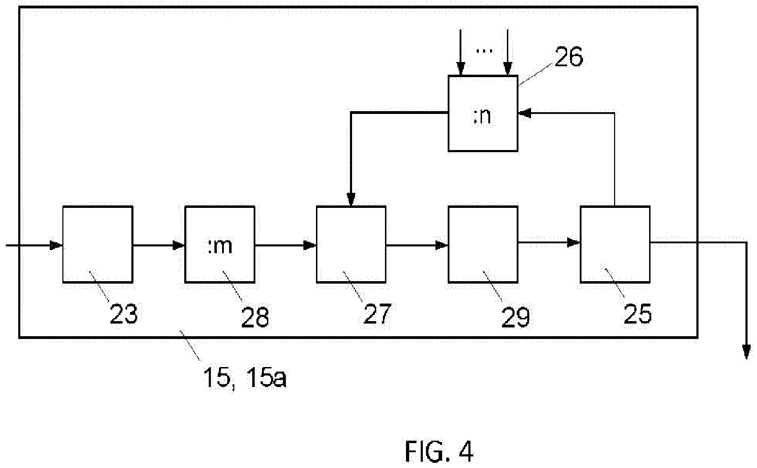

Weiter umfasst die Schaltungsanordnung 1 einen Mischer 14, wobei ein erster Eingangsanschluss des Mischers 14 mit dem Ausgangsanschluss der Bypass-Einrichtung 11 und ein weiterer Eingangsanschluss des Mischers 14 mit einer Einrichtung 15 zur Erzeugung eines Referenzsignals verbunden ist. Diese Einrichtung 15 kann, wie nachfolgend insbesondere mit Bezug auf die in Fig. 4 dargestellte Ausführungsform beschrieben, eine Phasenregelschleife umfassen oder ausbilden.

Das Referenzsignal ist hierbei insbesondere ein harmonisches Signal, insbesondere ein Sinussignal, mit einer einstellbaren Frequenz. Hierbei umfasst die Schaltungsanordnung 1 diese Einrichtung 15 zur Erzeugung des Referenzsignals.

Ein Ausgangsanschluss des Mischers 14 ist mit einer Filtereinrichtung 16 zur Tiefpassfilterung des gemischten Signals, welches an dem Ausgangsanschluss des Mischers 14 anliegt, verbunden. Die Filtereinrichtung 16 ist hierbei eine Filtereinrichtung mit einstellbarer Grenzfrequenz.

Weiter umfasst die Schaltungsanordnung 1 eine Einrichtung 17 zur Bestimmung einer Signalleistung des gefilterten Signals, welches von der Filtereinrichtung 16 bereitgestellt wird. Nicht dargestellt ist ein A/D-Wandler, der ein Ausgangssignal der Einrichtung 17 digitalisieren kann, wobei der A/D-Wandler Teil der Steuer- und Auswerteeinrichtung 7 sein kann.

Weiter dargestellt ist, dass die Steuer-und Auswerteeinrichtung 7 das Schaltelement 10, insbesondere dessen Schaltzustände, einstellt. Ebenfalls dargestellt ist, dass die Steuer-und Auswerteeinrichtung 7 einen Betrieb, insbesondere einen Zustand, der Bypass-Einrichtung 11 steuert. Weiter kann durch die Steuer-und Auswerteeinrichtung 7 eine Grenzfrequenz der Filtereinrichtung 16 eingestellt werden. Ebenfalls kann durch die Steuer-und Auswerteeinrichtung 7 die Einrichtung 15 zur Erzeugung eines Referenzsignals derart gesteuert werden, dass eine gewünschte Frequenz dieses Referenzsignals eingestellt wird.

Weiter kann durch die Steuer-und Auswerteeinrichtung 7 die Signalleistung des gefilterten Signals ausgewertet werden, insbesondere mit einem vorbestimmten Schwellwert verglichen werden.

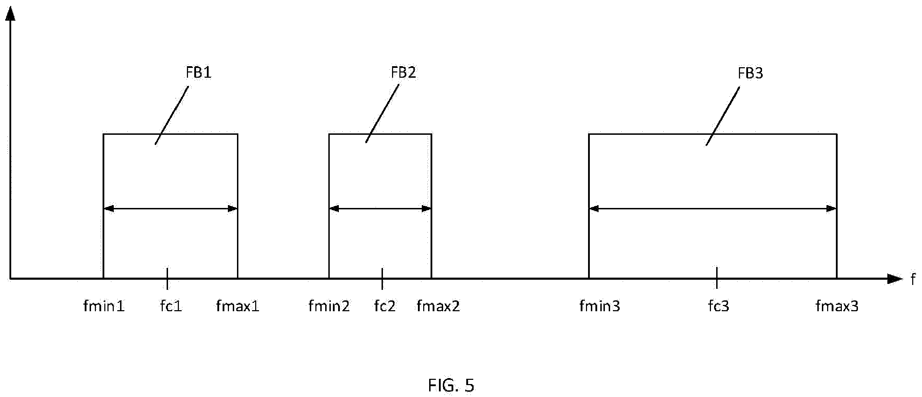

So wird, wie nachfolgend noch näher erläutert, eine vorbestimmte Frequenz des Referenzsignals eingestellt. Weiter wird dieses Referenzsignal dann mit dem ausgekoppelten Signal gemischt. Das gemischte Signal wird dann gefiltert, wobei dann der Pegel des gefilterten Signals bestimmt wird. Weiter wird in Abhängigkeit der eingestellten Frequenz des Referenzsignals und der Signalleistung ein Frequenzband FB1, FB2, FB3 (siehe Figur 5) identifiziert, in dem ein Uplink-oder Downlink-Signal übertragen wird.

Weiter kann auch identifiziert werden, ob ein Uplink-oder eine Downlink-Signal über die Schaltungsanordnung 1 übertragen wird. Wird zum Beispiel detektiert, dass die Signalleistung des gefilterten Signals höher als ein vorbestimmter Schwellwert ist, so kann ein Schaltzustand des Schaltelements 10 geändert werden. Wird zum Beispiel der Schaltzustand derart geändert, dass nicht mehr der antennenseitige Eingangsanschluss des Schaltelements 10, sondern der endgeräteseitige Eingangsanschluss mit dem Ausgangsanschluss des Schaltelements 10 verbunden ist und erhöht sich die Signalleistung des gefilterten Signals, so kann identifiziert werden, dass ein Uplink-Signal übertragen wird. Reduziert sich die Signalleistung, so kann identifiziert werden, dass ein Downlink-Signal übertragen wird. Wird zum Beispiel der Schaltzustand derart geändert, dass nicht mehr der endgeräteseitige Eingangsanschluss des Schaltelements 10, sondern der antennenseitige Eingangsanschluss mit dem Ausgangsanschluss des Schaltelements 10 verbunden ist und erhöht sich die Signalleistung des gefilterten Signals, so kann identifiziert werden, dass ein Downlink-Signal übertragen wird. Reduziert sich die Signalleistung, so kann identifiziert werden, dass ein Uplink-Signal übertragen wird.

Wird in einem geöffneten Zustand des Trennschaltelements 12 eine zu hohe Signalleistung detektiert, so kann ein geschlossener Zustand des Trennschaltelements 12 eingestellt werden, insbesondere um eine Belastung der Bauteile durch zu hohe Signalleistungen und eine Übersteuerung der Verstärkereinrichtung, die zur unerwünschten Bildung von Oberwellen führen kann, zu vermeiden.

Weiter dargestellt ist, dass die Steuer- und Auswerteeinrichtung 7 einen Betrieb, insbesondere einen Zustand, des Abschnitts 8 steuert, beispielsweise durch Aktivierung/Deaktivierung von Verstärkereinrichtungen und Einstellen von Schaltzuständen von Schaltelementen des Abschnitts 8. Die Steuerung des Betriebs des Abschnitts 8 kann beispielsweise in Abhängigkeit des identifizierten Frequenzbands FB1, FB2, FB3 erfolgen.

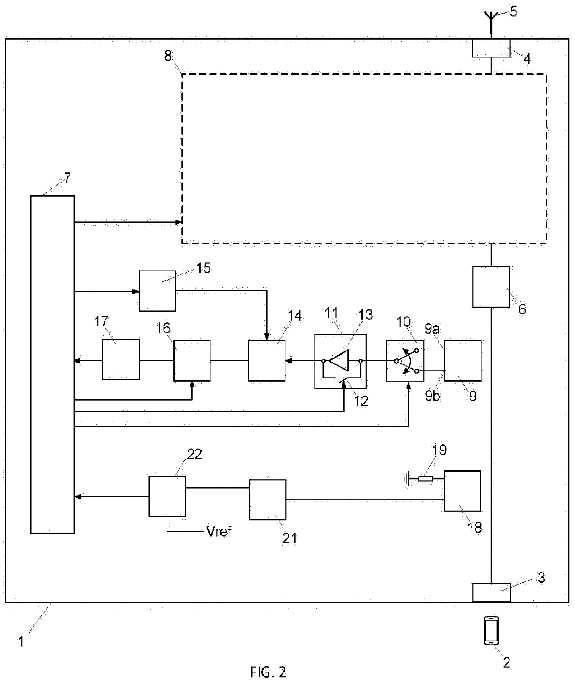

Figur 2 zeigt ein schematisches Blockdiagramm einer erfindungsgemäßen Schaltungsanordnung 1 in einer weiteren Ausführungsform. Die in Figur 2 dargestellte Schaltungsanordnung 1 ist hierbei im Wesentlichen wie die in Figur 1 dargestellte Schaltungsanordnung 1 ausgebildet, womit auf die entsprechenden Ausführungen verwiesen wird. Im Unterschied zu der in Figur 1 dargestellten Schaltungsanordnung 1 umfasst die in Figur 2 dargestellte Ausführungsform eine Einrichtung zur Signalübertragungsdetektion. Diese Einrichtung umfasst einen weiteren Signalkoppler 18, durch den ein Signal aus einem Signalpfad zwischen der endgeräteseitigen Schnittstelle 3 und der Dämpfereinrichtung 6 ausgekoppelt wird. Dieser Signalkoppler 18 kann als Richtkoppler ausgebildet sein, der einen (kleinen) Teil der Signalleistung des Signals aus dem Signalpfad auskoppelt. Ein erster Ausgangsanschluss dieses weiteren Signalkopplers 18 ist hierbei über ein Widerstandselement 19, welches einen Anpassungswiderstand bildet und einen vorbestimmten Widerstandswert, z.B. 50 Ohm, aufweisen kann, mit einem Referenzpotenzial, insbesondere einem Massepotential, verbunden. Ein weiterer Ausgangsanschluss des weiteren Signalkopplers 18 ist mit einer Detektoreinrichtung 21 verbunden, z.B. über eine nicht dargestellte Verstärkereinrichtung. Diese Detektoreinrichtung 21 bestimmt eine Signalleistung, insbesondere durch Erzeugen eines Spannungssignals, dessen Amplitude proportional zur Signalleistung ist. Das die Signalleistung repräsentierende Ausgangssignal wird dann an eine Komparatoreinrichtung 22 übertragen. Eine Referenzspannung Vref, die einen Vergleichsschwellwert der Komparatoreinrichtung 22 bildet, ist derart gewählt, dass eine Rauschleistung der Detektoreinrichtung 21 nicht zur Erzeugung eines Detektionssignals durch die Komparatoreinrichtung 22 führt. Von der Höhe der Referenzspannung Vref hängt die Empfindlichkeit der Detektion einer Signalübertragung ab. Je dichter die Referenzspannung Vref an einer die Rauschleistung repräsentierenden und von der Detektoreinrichtung 21 erzeugten Spannung liegt, desto schwächere Signale können detektiert werden. Ist das die Signalleistung repräsentierende und von der Detektoreinrichtung 21 erzeugte Ausgangssignal gleich oder größer als die Referenzspannung Vref, so erzeugt die Komparatoreinrichtung 22 das Detektionssignal und überträgt diese an die Auswerteeinrichtung 7.

Wird ein solches Detektionssignal durch die Steuer-und Auswerteeinrichtung 7 detektiert, so wird eine Signalübertragung über die Schaltungsanordnung 1 detektiert. Insbesondere wird also detektiert, ob ein Signal über die Schaltungsanordnung 1 übertragen wird, wobei diese Detektion unabhängig von einem Frequenzband FB1, FB2, FB3 (siehe Figur 5) erfolgt. Mit anderen Worten wird eine frequenzbandunabhängige Detektion einer Signalübertragung durchgeführt. Wird derart detektiert, dass ein Signal übertragen wird, so kann durch die Steuer-und Auswerteeinrichtung 7 die Identifizierung des Frequenzbands FB1, FB2, FB3 oder eines Kanals K1,... K6 gestartet werden, insbesondere durch die Erzeugung eines Referenzsignals.

Es ist möglich, dass die Schaltungsanordnung eine weitere Komparatoreinrichtung (nicht dargestellt) umfasst, mittels derer das Ausgangssignal der Detektoreinrichtung 21 auch mit einem vorbestimmten Schutzsignalpegel vergleichbar ist. Dieser Schutzsignalpegel kann in Form einer weiteren Referenzspannung (nicht dargestellt) bereitgestellt werden, wobei die weitere Komparatoreinrichtung den Pegel des Ausgangssignals mit dem Schutzsignalpegel vergleicht. Hierbei wird ein Schutzsignal erzeugt, falls die Signalleistung größer als die vorbestimmte Schutzsignalleistung ist. Das Schutzsignal kann zur Steuerung der Dämpfungseinrichtung 6 dienen und hierzu an die Auswerteeinrichtung 7 übertragen werden. Insbesondere kann der Dämpfungsfaktor der Dämpfereinrichtung 6 erhöht werden, wenn das Schutzsignal erzeugt wurde. Hierdurch kann eine Belastung der Schaltungsanordnung 1 durch zu hohe Signalleistungen verhindert werden. Die vorbestimmte Schutzsignalleistung kann höher als die Startsignalleistung sein.

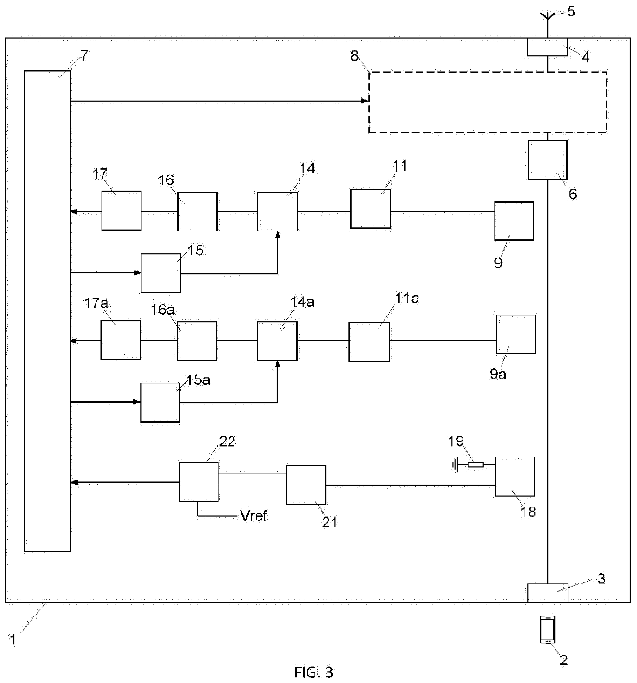

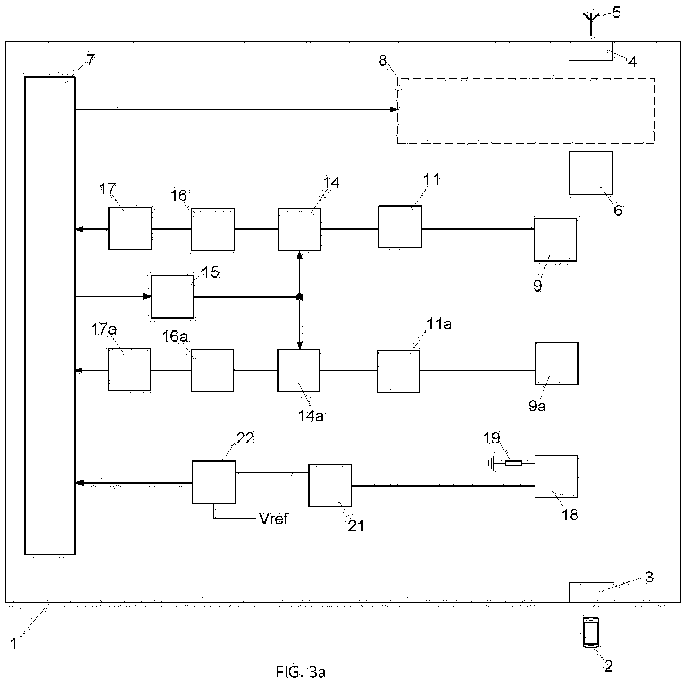

Figur 3 zeigt ein schematisches Blockdiagramm einer erfindungsgemäßen Schaltungsanordnung 1 in einer weiteren Ausführungsform. Die in Figur 3 dargestellte Schaltungsanordnung 1 ist hierbei im Wesentlichen wie die in Figur 2 dargestellte Schaltungsanordnung 1 ausgebildet, womit auf die entsprechenden Ausführungen verwiesen wird. Im Unterschied zu der in Figur 2 dargestellten Schaltungsanordnung 1 umfasst die in Figur 3 dargestellte Ausführungsform kein Schaltelement 10 zur Verbindung des Signalkopplers 9 mit der Bypass-Einrichtung 11.

Im Unterschied zu der in Fig. 2 dargestellten Ausführungsform umfasst die Schaltungsanordnung 1 einen weiteren Signalkoppler 9a, der ebenfalls als Richtkoppler ausgebildet sein kann, eine weitere Bypass-Einrichtung 11a, einen weiteren Mischer 14a, eine weitere Filtereinrichtung 16a, eine weitere Einrichtung 17a zur Bestimmung der Signalleistung und eine weitere Einrichtung 15a zur Erzeugung eines weiteren Referenzsignals.

Hierbei bildet die Gesamtheit aus Signalkoppler 9, Bypass-Einrichtung 11, Mischer 14, Filtereinrichtung 16, Einrichtung 17 zur Bestimmung der Signalleistung und Einrichtung 15 zur Erzeugung eines Referenzsignals einen Detektionsabschnitt der Schaltungsanordnung 1.

Die Gesamtheit aus dem weiteren Signalkoppler 9a, der weiteren Bypass-Einrichtung, dem weiteren Mischer 14a, der weiteren Filtereinrichtung 16a, der weiteren Einrichtung 17a zur Bestimmung der Signalleistung und der weiteren Einrichtung 15a zur Erzeugung eines Referenzsignals bildet einen Überwachungsabschnitt der Schaltungsanordnung 1.

Hierbei ist der Detektionsabschnitt schaltungstechnisch gleich dem Überwachungsabschnitt ausgebildet. Allerdings kann die vorhergehend erläuterte Isolationseigenschaft der verschiedenen Anschlüsse des Signalkopplers 9 in Bezug auf den antennenseitigen Anschluss und den endgeräteseitigen Anschluss verschiedene von der Isolationseigenschaft des weiteren Signalkopplers 9a, insbesondere umgekehrt sein. Mit anderen Worten ist eine Richtungssensitivität der Signalkoppler 9, 9a voneinander verschieden.

Das Vorhandensein eines Detektionsabschnitts und eines Überwachungsabschnitts ermöglicht in vorteilhafter Weise, dass gleichzeitig, zum Beispiel durch Einstellung verschiedener Frequenzen des Referenzsignals und Grenzfrequenzen der Filtereinrichtung 16, Frequenzbänder FB1, FB2, FB3 oder Kanäle K1,..., K6 der Frequenzbänder FB1, FB2, FB3 identifiziert werden können, in denen Signale übertragen werden. Gleichzeitig kann ein bereits identifiziertes Frequenzband FB1, FB2, FB3 bzw. ein bereits identifizierter Kanal K1, ..., K6 weiterhin überwacht werden, zum Beispiel durch kontinuierliche oder periodische Bestimmung der Signalleistung des in diesem identifizierten Frequenzband FB1, FB2, FB3 oder Kanal K1,..., K6 übertragenen Signals.

Insbesondere ist es möglich, den Abschnitt 8 der Schaltungsanordnung 1 auch in Abhängigkeit des Überwachungsergebnisses zu steuern. Wird beispielsweise detektiert, dass das Ausgangssignal der weiteren Einrichtung 17a unter einen vorbestimmten Schwellwert fällt, so kann detektiert werden, dass keine Signalübertragung in dem entsprechenden Frequenzband FB1, FB2, FB3 oder Kanal K1,..., K6 mehr erfolgt. Dann können zum Beispiel die entsprechend aktivierten Verstärkereinrichtungen des Abschnitts 8 deaktiviert werden.

Weiter kann auch mit der in Fig. 3 dargestellten Schaltungsanordnung identifiziert werden, ob ein Uplink-oder eine Downlink-Signal über die Schaltungsanordnung 1 übertragen wird. Wird z.B. durch die Steuer- und Auswerteeinrichtung 7 detektiert, dass die von der Einrichtung 17 des Detektionsabschnitts bestimmte Leistung niedriger ist als die von der Einrichtung 17a des Überwachungsabschnitts bestimmte Leistung, so kann identifiziert werden, dass ein Uplink-Signal übertragen wird. Wird z.B. durch die Steuer- und Auswerteeinrichtung 7 detektiert, dass die von der Einrichtung 17 des Detektionsabschnitts bestimmte Leistung höher ist als die von der Einrichtung 17a des Überwachungsabschnitts bestimmte Leistung, so kann identifiziert werden, dass ein Downlink-Signal übertragen wird. Hierzu kann es erforderlich sein, dass gleiche Frequenzen der von den Einrichtungen 15, 15a erzeugten Referenzsignale eingestellt werden.

Figur 3a zeigt ein schematisches Blockdiagramm einer erfindungsgemäßen Schaltungsanordnung 1 in einer weiteren Ausführungsform. Die in Figur 3a dargestellte Schaltungsanordnung 1 ist hierbei im Wesentlichen wie die in Figur 3 dargestellte Schaltungsanordnung 1 ausgebildet, womit auf die entsprechenden Ausführungen verwiesen wird. Im Unterschied zu der in Figur 3 dargestellten Schaltungsanordnung 1 umfasst die in Fig. 3a dargestellte Ausführungsform keine weitere Einrichtung 15a zur Erzeugung eines weiteren Referenzsignals. Vielmehr wird das von der Einrichtung 15 zur Erzeugung des Referenzsignals erzeugte Referenzsignal an den Mischer 14 als auch an den weiteren Mischer 14a übertragen.

Bei dieser Ausführungsform kann die Frequenz des Referenzsignals, welches den Mischern 14, 14a zugeführt wird, nicht unabhängig voneinander eingestellt werden. Somit kann auch nicht, wie bei der in Fig. 3 dargestellten Ausführungsform, die Frequenzeinstellung für eine mit dem dort dargestellten Überwachungsabschnitt durchgeführten Überwachung unabhängig von der Frequenzeinstellung für eine mit dem dort dargestellten Detektionsabschnitt durchgeführten Detektion erfolgen. Allerdings kann mit der in Fig. 3a dargestellten Ausführungsform - wie auch in Bezug auf die in Fig. 3 dargestellte Ausführungsform bereits erläutert - identifiziert werden, ob ein Uplink-oder eine Downlink-Signal über die Schaltungsanordnung 1 übertragen wird. Dies ist insbesondere vorteilhaft für Signale, die gemäß dem TDD-Modus übertragen werden, da Uplink- und Downlink-Signale in einem solchen Modus die gleichen Frequenzen aufweisen können. Mit dem Abschnitt der Schaltungsanordnung 1, der den weiteren Signalkoppler 9a, die weiteren Bypass-Einrichtung 11a, den weiteren Mischer 14a, die weitere Filtereinrichtung 16a und die weitere Einrichtung 17a zur Bestimmung der Signalleistung umfasst, kann hierbei eine zuverlässige Analyse von Uplink-Signalen erfolgen, die durch den weiteren Signalkoppler 9 zuverlässig ausgekoppelt werden, wobei diese insbesondere nicht von zu starken Downlink-Signalen überlagert werden. Entsprechend kann mit dem Abschnitt der Schaltungsanordnung 1, der den Signalkoppler 9, die Bypass-Einrichtung 11, den Mischer 14, die Filtereinrichtung 16 und die Einrichtung 17 zur Bestimmung der Signalleistung umfasst, eine zuverlässige Analyse von Downlink-Signalen erfolgen, die durch den Signalkoppler 9 zuverlässig ausgekoppelt werden, wobei diese insbesondere nicht von zu starken Uplink-Signalen überlagert werden.

Figur 4 zeigt ein schematisches Blockschaltbild einer Einrichtung 15, 15a zur Erzeugung eines Referenzsignals. Die Einrichtung 15, 15a ist hierbei als Phasenregelschleife ausgebildet. Diese umfasst einen steuerbaren Oszillator 25, der das Referenzsignal als Ausgangssignal erzeugt. Das Ausgangssignal dieses Oszillators 25 wird einem Frequenzteiler 26 zugeführt. Ein Teilerfaktor n dieses Frequenzteilers 26 kann durch die Steuer- und Auswerteeinrichtung 7 eingestellt werden. Ein Ausgangssignal dieses Frequenzteilers 26 wird einem Phasenkomparator 27 zugeführt. Ein weiteres Eingangssignal dieses Phasenkomparators 27 wird durch einen weiteren Frequenzteiler 28 bereitgestellt, wobei der Teilerfaktor m dieses weiteren Frequenzteilers 28 ebenfalls durch die Steuer-und Auswerteeinrichtung 7 eingestellt werden kann. Ein Eingangssignal dieses weiteren Frequenzteilers 28 ist hierbei ein Oszillationssignal, insbesondere ein Sinussignal, welches von einer entsprechenden Signalquelle, insbesondere von einem Schwingquarz bzw. einem Quarzoszillator 23, erzeugt werden kann. Die Signalquelle kann hierbei Teil der Steuer-und Auswerteeinrichtung 7 oder aber separat davon ausgebildet sein. Ein Ausgangssignal des Phasenkomparators 27 wird einem Schleifenfilter 29 zugeführt, dessen Ausgangssignal wiederum den steuerbaren Oszillator 25, insbesondere eine Kapazität einer Kapazitätsdiode, einstellt.

Die Teilerfaktoren der Frequenzteiler 26, 28 können durch die Steuer- und Auswerteeinrichtung 7 derart eingestellt werden, dass jede (Mobil-)Funkfrequenz in einem Frequenzraster erzeugt werden kann, wobei eine Rasterschrittweite z.B. 200 kHz betragen kann, also benachbarte Frequenzen einen Frequenzabstand von 200 kHz zueinander haben.

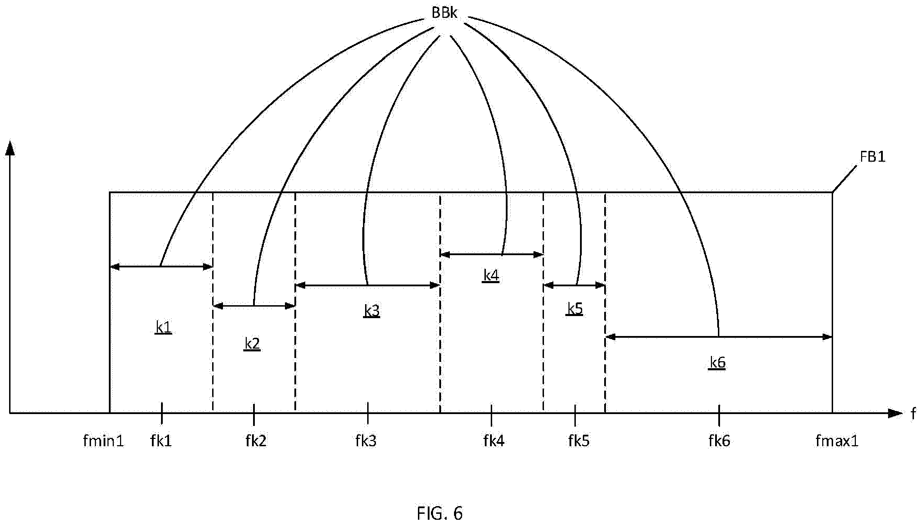

Frequenzen von zur Signalübertragung benutzbaren Frequenzbändern FB1, FB2, FB3 oder Kanälen K1,...,K6 (siehe Figuren 5 und 6), die auch als gültige Bänder oder Kanäle bezeichnet werden können, bzw. die diesen Bändern oder Kanälen zugeordneten Frequenzen können in der Steuer- und Auswerteeinrichtung 7 gespeichert sein. Diese Frequenzen können dann durch Einstellung der Teilerfaktoren eingestellt werden.

Diese benutzbaren Frequenzbänder FB1, FB2, FB3 oder Kanäle K1,...,K6 können regionsspezifische Bänder oder Kanäle sein. Somit können also für verschiedene Regionen oder Länder voneinander verschiedene Frequenzen von benutzbaren Frequenzbändern FB1, FB2, FB3 oder Kanälen K1,...,K6 gespeichert sein. Regionen können z.B. Nordamerika, China und Südamerika sowie Europa sein. Somit kann die vorgeschlagene Vorrichtung in verschiedenen Regionen benutzt werden, wobei zur Benutzung in einer bestimmten Region die Frequenzen der entsprechend regionsspezifischen zur Signalübertragung benutzten Frequenzbänder oder Kanäle in der Steuer- und Auswerteeinrichtung 7 gespeichert werden, insbesondere über eine geeignete Schnittstelle, z.B. eine CAN-Bus-Schnittstelle. Prinzipiell können beliebige Zusammenstellungen von Frequenzen in der Steuer- und Auswerteeinrichtung 7 gespeichert werden. Somit können also über einen CAN-Bus die Frequenzen der entsprechend regionsspezifischen zur Signalübertragung benutzten Frequenzbänder oder Kanäle in der Steuer- und Auswerteeinrichtung 7 programmiert werden. Wird die Region verlassen, so kann in entsprechender Weise eine Umprogrammierung erfolgen.

Figur 5 zeigt eine schematische Übersicht über mehrere Frequenzbänder FB1, FB2, FB3, in denen Signale über die Schaltungsanordnung 1 übertragen werden können. Dargestellt sind jeweils eine untere Grenzfrequenz fmin1, fmin2, fmin3 und eine obere Grenzfrequenz fmax1, fmax2, fmax3 dieser Frequenzbänder FB1, FB2, FB3. Die Bandbreite der einzelnen Frequenzbänder FB1, FB2, FB3 ergibt sich als Differenz zwischen der bandspezifischen oberen Grenzfrequenz fmax1, fmax2, fmax3 und der bandspezifischen unteren Grenzfrequenz fmin1, fmin2, fmin3. Weiter dargestellt sind Mittenfrequenzen fc1, fc2, fc3 der einzelnen Frequenzbänder FB1, FB2, FB3. Diese ergeben sich als Summe der bandspezifischen unteren Grenzfrequenz fmin1, fmin2, fmin3 und der Hälfte der erläuterten Bandbreite.

Zur Identifizierung, ob ein Signal in einem dieser Bänder FB1, FB2, FB3 übertragen wird, kann in einem Band-Identifikationsschritt die Frequenz des Referenzsignals auf die Mittenfrequenz fc1 des ersten Frequenzbands FB1 eingestellt werden. Eine Grenzfrequenz der Filtereinrichtung 16 kann dann beispielsweise auf den halben Wert der Bandbreite des ersten Frequenzbands FB1 eingestellt werden. Wird dann detektiert, dass die Signalleistung des von der Einrichtung 17 (siehe zum Beispiel Figur 1) bereitgestellten Signals größer als ein vorbestimmter Schwellwert oder gleich dem vorbestimmten Schwellwert ist, so wird identifiziert, dass ein Signal in diesem ersten Frequenzband FB1 übertragen wird.

Alternativ ist es aber auch möglich, dass in dem Band-Identifikationsschritt die Frequenz des Referenzsignals auf die minimale Frequenz, also die Bandanfangsfrequenz, des ersten Frequenzbands FB1 eingestellt wird. Eine Grenzfrequenz der Filtereinrichtung 16 kann dann beispielsweise auf den Wert der Bandbreite des ersten Frequenzbands FB1 eingestellt werden. Wird dann detektiert, dass die Signalleistung des von der Einrichtung 17 bereitgestellten Signals größer als ein vorbestimmter Schwellwert oder gleich dem vorbestimmten Schwellwert ist, so wird identifiziert, dass ein Signal in diesem ersten Frequenzband FB1 übertragen wird.

Wird detektiert, dass die Signalleistung kleiner als der vorbestimmte Schwellwert ist, so wird kein Signal identifiziert, das in diesem ersten Frequenzband FB1 übertragen wird. In diesem Fall kann in einem weiteren Band-Identifikationsschritt die Frequenz des Referenzsignals auf die Mittenfrequenz fc2 des zweiten Frequenzbands FB2 und die Grenzfrequenz der Filtereinrichtung 16 auf die halbe Bandbreite des zweiten Frequenzbands FB2 bzw. auf die Bandanfangsfrequenz des zweiten Frequenzbands FB2 und die Bandbreite des zweiten Frequenzbands FB2 eingestellt werden. Wird dann detektiert, dass die Signalleistung des von der Einrichtung 17 (siehe zum Beispiel Figur 1) bereitgestellten Signals größer als ein vorbestimmter Schwellwert oder gleich dem vorbestimmten Schwellwert ist, so wird identifiziert, dass ein Signal in diesem zweiten Frequenzband FB2 übertragen wird.

Wird detektiert, dass die Signalleistung kleiner als der vorbestimmte Schwellwert ist, so wird kein Signal identifiziert, das in diesem zweiten Frequenzband FB2 übertragen wird. In diesem Fall kann in einem weiteren Band-Identifikationsschritt die Frequenz des Referenzsignals auf die Mittenfrequenz fc3 des dritten Frequenzbands FB3 und die Grenzfrequenz der Filtereinrichtung 16 auf die halbe Bandbreite des dritten Frequenzbands FB3 bzw. auf die Bandanfangsfrequenz des dritten Frequenzbands FB3 und die Bandbreite des dritten Frequenzbands FB3 eingestellt werden. Wird dann detektiert, dass die Signalleistung des von der Einrichtung 17 (siehe zum Beispiel Figur 1) bereitgestellten Signals größer als ein vorbestimmter Schwellwert oder gleich dem vorbestimmten Schwellwert ist, so wird identifiziert, dass ein Signal in diesem dritten Frequenzband FB3 übertragen wird. Wird detektiert, dass die Signalleistung kleiner als der vorbestimmte Schwellwert ist, so kann dann die Identifizierung entsprechend fortgesetzt werden.

Figur 6 zeigt eine schematische Ansicht des ersten Frequenzbands FB1 mit sechs Kanälen K1, K2, K3, K4, K5, K6. Ebenfalls dargestellt sind Mittenfrequenzen fk1, fk2, fk3, fk4, fk5, fk6 dieser Kanäle K1,..., K6. Weiter dargestellt ist eine Bandbreite BBK der Kanäle K1,..., K6, wobei in Figur 6 die Kanäle K1,..., K6 voneinander verschiedene Bandbreiten BBK aufweisen. Selbstverständlich ist es vorstellbar, dass verschiedene Kanäle K1,..., K6 gleiche Bandbreiten aufweisen.

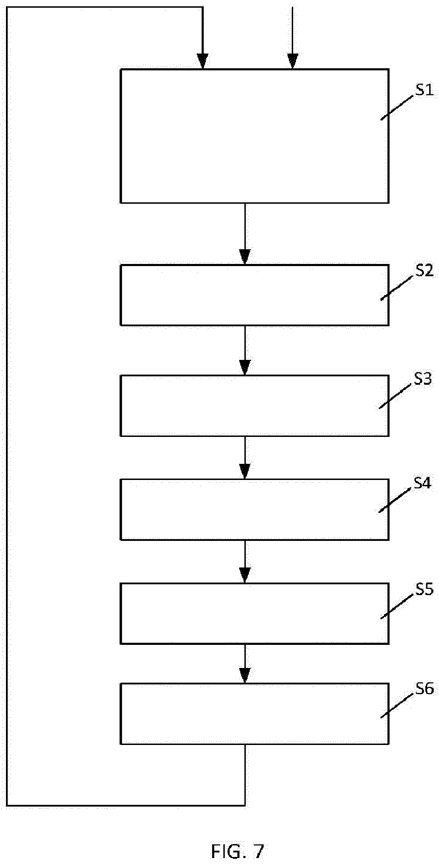

Wurde, beispielsweise in einem Band-Identifikationsschritt, detektiert, dass in dem ersten Frequenzband FB1 ein Signal übertragen wird, so kann in einem Kanal-Identifikationsschritt, der nachfolgend in Bezug auf Fig. 7 noch näher erläutert wird, geprüft werden, in welchem Kanal K1,..., K6 oder in welchen Kanälen K1,..., K6 des ersten Frequenzbands FB1 das Signal bzw. die Signale übertragen werden. Hierzu kann die vorhergehend erläuterte Rasterprüfung durchgeführt werden.

Wurde zum Beispiel identifiziert, dass in einem Frequenzband FB1, FB2, FB3 oder einem Kanal K1,..., K6 ein Signal übertragen wird, so kann die entsprechend eingestellte Frequenz des Referenzsignals so wie die Grenzfrequenz gespeichert werden, beispielsweise durch die Steuer- und Auswerteeinrichtung 7. Dann kann entweder die Identifizierung beendet oder ein weiterer Band-Identifikationsschritt oder ein weiterer Kanal-Identifikationsschritt durchgeführt werden, beispielsweise um Frequenzbänder FB1, FB2, FB3 oder Kanäle K1,..., K6 zu identifizieren, in denen weitere Signale, insbesondere gleichzeitig, über die Schaltungsanordnung 1 übertragen werden. Zu einem späteren Zeitpunkt können die gespeicherten Frequenzen abgerufen und somit zeitlich schnell erneut ein Pegel des Signals, das in dem entsprechenden Frequenzband FB1, FB2, FB3 oder in dem entsprechenden Kanal K1,..., K6 übertragen wird/wurde, bestimmt werden. Dies kann zum Beispiel zum Überwachen des entsprechenden Frequenzbandes FB1, FB2, FB3 oder Kanals K1,..., K6 durchgeführt werden. Auch können die gespeicherten Frequenzen genutzt werden, um mit dem in Figur 3 dargestellten Überwachungsabschnitt das entsprechende Frequenzband FB1, FB2, FB3 oder den entsprechenden Kanal K1,..., K6 zu überwachen.

Figur 7 zeigt ein schematisches Flussdiagramm eines erfindungsgemäßen Verfahrens zur Identifizierung eines Frequenzbandes FB1, FB2, FB3 oder Kanals K1,..., K6, in dem ein Signal übertragen wird. In einem ersten Schritt S1 wird ein ausgekoppeltes Signal bereitgestellt, beispielsweise durch den in Figur 1 dargestellten Signalkoppler 9. In einem zweiten Schritt S2 wird ein Referenzsignal mit einer vorbestimmten Frequenz bereitgestellt, insbesondere durch die Einrichtung 15 zur Erzeugung eines Referenzsignals.

So kann beispielsweise geprüft werden, ob in einem ersten Frequenzband FB1 ein Signal übertragen wird. Hierzu kann die Frequenz des Referenzsignals auf eine Bandanfangsfrequenz, z.B. 1920 MHz, oder eine Bandendfrequenz, z.B. 1980 MHz, und die Grenzfrequenz der als Tiefpass ausgebildeten Filtereinrichtung 16 auf 60 MHz eingestellt werden.

In einem dritten Schritt S3 werden das Referenzsignal und das ausgekoppelte Signal gemischt und in einem vierten Schritt S4 gefiltert, insbesondere mittels der Filtereinrichtung 16. In einem fünften Schritt S5 wird eine Signalleistung des gefilterten Signals bestimmt. In einem sechsten Schritt S6 wird die Signalleistung mit einem vorbestimmten Schwellwert (Identifizierungs-Schwellwert) verglichen, wobei in Abhängigkeit der Frequenz des Referenzsignals ein dieser Frequenz zugeordnetes Frequenzband FB1, FB2, FB3 (siehe Figur 5) oder ein dieser Frequenz zugeordneter Kanal K1,..., K6 als Frequenzband/Kanal, in diesem Fall also das erste Frequenzband, identifiziert wird, in dem ein Signal übertragen wird, wenn die Signalleistung höher als der vorbestimmte Schwellwert oder gleich dem vorbestimmten Schwellwert ist.

Kein Frequenzband/Kanal bzw. keine Signalübertragung in dem geprüften Band bzw. Kanal wird identifiziert, wenn die Signalleistung kleiner als der vorbestimmte Schwellwert ist. Die Sequenz vom ersten bis zum sechsten Schritt S1,..., S6 kann auch als Band- oder Kanal-Identifikationsschritt bezeichnet werden. Wie vorhergehend erläutert, kann sowohl im Falle einer Identifizierung als auch im Falle einer Nicht-Identifizierung ein weiterer Band- oder Kanal-Indikationsschritt durchgeführt werden, beispielsweise um ein Frequenzband/ein Kanal zu identifizieren, in dem ein weiteres Signal übertragen wird oder um einen Kanal zu identifizieren, in dem ein Signal eines identifizierten Frequenzbandes FB1, FB2, FB3 übertragen wird. Bei der Durchführung eines weiteren Band- oder Kanal-Identifikationsschritts kann die Frequenz des Referenzsignals und die Grenzfrequenz der Filtereinrichtung 16 geändert werden. Soll z.B. geprüft werden, ob ein Signal in einem dritten Frequenzband FB3 übertragen wird, so kann die Frequenz des Referenzsignals auf die entsprechende Bandanfangsfrequenz, z.B. 1710 MHz, oder die entsprechende Bandendfrequenz, z.B. 1785 MHz, und die Grenzfrequenz der Filtereinrichtung 16 auf die entsprechende Bandbreite, z.B. 75 MHz, eingestellt werden.

Alternativ zum Vergleich der Signalleistung mit einem vorbestimmten Schwellwert zur Identifikation einer Signalübertragung in einem Frequenzband/Kanal kann auch für mehrere Bänder/Kanäle jeweils - wie erläutert - die entsprechende Frequenz des Referenzsignals und die entsprechende Grenzfrequenz der Filtereinrichtung 16 eingestellt werden und die bandspezifische Signalleistung des gefilterten Signals bestimmt und gespeichert werden. Dann kann als das/der Frequenzband/Kanal, in dem eine Signalübertragung erfolgt, dasjenige/derjenige Frequenzband/Kanal identifiziert werden, dem die maximale bandspezifische Signalleistung zugeordnet ist und/oder dem eine bandspezifische Signalleistung zugeordnet ist und die mehr als ein vorbestimmtes Maß größer als die den weiteren Frequenzbändern/Kanälen zugeordneten bandspezifischen Signalleistungen ist.

Vorzugsweise erfolgt die erläuterte Identifizierung eines Frequenzbands/Kanals bzw. mehrerer Frequenzbänder/Kanäle, in dem/denen eine Signalübertragung erfolgt, in weniger als einer vorbestimmten Zeitdauer, die z.B. 10 ms betragen kann.

Wurde - wie vorhergehend erläutert - ein Frequenzband identifiziert, in dem eine Signalübertragung erfolgt, dann kann weiter ein frequenzbandspezifischer Kanal oder können mehrere frequenzbandspezifische Kanäle des identifizierten Frequenzbands und ihre jeweiligen Kanalbandbreiten identifiziert werden, in dem/denen die Signalübertragung erfolgt. Dies kann in einem sogenannten Kanalidentifikationsschritt erfolgen.

Hierzu kann die Grenzfrequenz der Filtereinrichtung 16 auf eine vorbestimmte Rasterschrittweite, z.B. auf 200 KHz, eingestellt werden. Dann kann, beginnend bei der Bandanfangsfrequenz des identifizierten Frequenzbands, die Frequenz des Referenzsignals in Inkrementen um die vorbestimmte Rasterschrittweite bis zur Bandendfrequenz inkrementiert werden, wobei für jedes dieser derart eingestellten Referenzsignale die Signalleistung des gefilterten Signals als Segmentleistung bestimmt und gespeichert werden, wobei die Signalleistung auch für die Bandanfangsfrequenz bestimmt wird. Bei dieser Inkrementierung kann das Referenzsignal für jede der eingestellten Frequenzen für eine vorbestimmte Zeitdauer erzeugt werden, die abhängig von der Einschwingdauer der Einrichtung zur Erzeugung des Referenzsignals, der Messzeit der Einrichtung zur Bestimmung und der Auswertezeit, die von der Steuer- und Auswerteeinrichtung benötigt wird, sein kann. Nach Ablauf dieser Zeitdauer kann die entsprechende Inkrementierung erfolgen.

Mit anderen Worten erfolgt ein lückenloses Durchsteppen des Frequenzbands, wobei für 200 KHz-breite Segmente des Frequenzbands jeweils die gefilterte Signalleistung bestimmt wird.

Dann können, wie vorhergehend erläutert, in Abhängigkeit der gespeicherten Segmentleistung der/die Kanal/Kanäle sowie die entsprechende Bandbreite identifiziert werden, in denen eine Signalübertragung erfolgt.

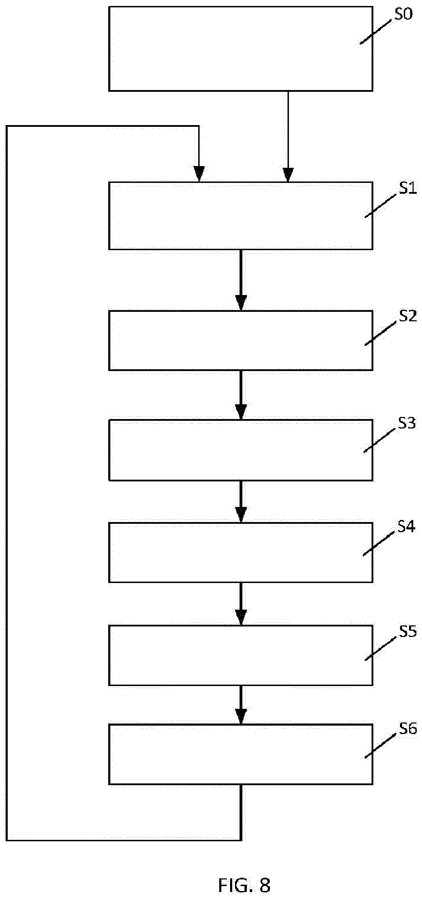

Figur 8 zeigt ein schematisches Flussdiagramm eines erfindungsgemäßen Verfahrens in einer weiteren Ausführungsform. Hierbei ist dargestellt, dass zeitlich vor der Durchführung eines Identifikationsschritts ein Schritt S0 zur Detektion einer Signalübertragung erfolgt, wobei dieser insbesondere mit der in Figur 2 dargestellten Einrichtung zur Signalübertragungsdetektion durchgeführt wird. Wird detektiert, dass ein Signal über die Schaltungsanordnung 1 übertragen wird, so wird ein Identifikationsschritt gestartet.

## Patentansprüche

1. Schaltungsanordnung (1) zur Übertragung von Uplink- und Downlink-Signalen zwischen zumindest einem Endgerät (2) und zumindest einer Antenne (5), wobei die Schaltungsanordnung (1) mindestens ein Signalkoppler (9) zur Bereitstellung eines ausgekoppelten Uplink- oder Downlink-Signals umfasst,
**dadurch gekennzeichnet, dass**
die Schaltungsanordnung (1) mindestens eine Einrichtung (15) zur Bereitstellung eines Referenzsignals mit zumindest zwei oder mehreren einstellbaren Frequenzen umfasst, wobei die Schaltungsanordnung (1) mindestens einen Mischer (14) zur Mischung des ausgekoppelten Signals und des Referenzsignals und mindestens eine Filtereinrichtung (16) zur Tiefpass- oder Bandpassfilterung des gemischten Signals umfasst, wobei die Schaltungsanordnung (1) mindestens eine Auswerteeinrichtung (7) zur Auswertung des gefilterten Signals umfasst, die dazu ausgelegt ist, wenn eine Signalleistung von dem gefilterten Signal für eine der eingestellten Frequenzen von dem Referenzsignal größer ist als ein Schwellenwert, das Frequenzband, in welchem das übertragene Signal übertragen wird, als das Frequenzband zu identifizieren, zu welchem die eine von den eingestellten Frequenzen von dem Referenzsignal zugeordnet ist.

2. Schaltungsanordnung nach Anspruch 1, **dadurch gekennzeichnet, dass** die Schaltungsanordnung (1) eine Einrichtung (17) zur Bestimmung einer Signalleistung des gefilterten Signals umfasst.

3. Schaltungsanordnung nach einem der vorangegangenen Ansprüche, **dadurch gekennzeichnet, dass** die Schaltungsanordnung dazu ausgelegt ist, dass eine Grenzfrequenz der Filtereinrichtung (16) eingestellt werden kann.

4. Schaltungsanordnung nach einem der vorangegangenen Ansprüche, **dadurch gekennzeichnet, dass** die Einrichtung (15) zur Bereitstellung des Referenzsignals als Phasenregelschleife ausgebildet ist oder eine solche umfasst.

5. Schaltungsanordnung nach einem der vorangegangenen Ansprüche, **dadurch gekennzeichnet, dass** die Schaltungsanordnung (1) mindestens eine Steuereinrichtung (7) zur Einstellung der Frequenz des Referenzsignals und/oder zur Einstellung der Grenzfrequenz der Filtereinrichtung (16) umfasst.

6. Schaltungsanordnung nach einem der vorangegangenen Ansprüche, **dadurch gekennzeichnet, dass** die Schaltungsanordnung (1) mindestens eine Einrichtung zur Signalübertragungsdetektion umfasst.

7. Schaltungsanordnung nach einem der vorangegangenen Ansprüche, **dadurch gekennzeichnet, dass** die Schaltungsanordnung (1) mindestens ein Schaltelement (10) umfasst, wobei in einem ersten Schaltzustand des Schaltelements (10) ein erster Anschluss (9a) des Signalkopplers (9) mit dem Mischer (14) und in einem weiteren Schaltzustand des Schaltelements (10) ein weiterer Anschluss (9b) des Signalkopplers (9) mit dem Mischer (14) verbunden ist.

8. Schaltungsanordnung nach einem der vorangegangenen Ansprüche, **dadurch gekennzeichnet, dass** die Schaltungsanordnung (1) eine Bypass-Einrichtung (11) umfasst, wobei ein Signal zwischen dem Signalkoppler (9) und dem Mischer (14) über die Bypass- Einrichtung (11) übertragen wird.

9. Schaltungsanordnung nach einem der vorangegangenen Ansprüche, **dadurch gekennzeichnet, dass** die Schaltungsanordnung dazu ausgelegt ist, dass in Abhängigkeit der eingestellten Frequenz und der mindestens einen Signaleigenschaft zusätzlich mindestens ein Kanal (K1 , ... , K6) identifiziert werden kann, in dem das übertragene Signal übertragen wird wobei die Schaltungsanordnung optional dazu ausgelegt ist, dass der Kanal (K1 , ... , K6) zusätzlich in Abhängigkeit der eingestellten Grenzfrequenz der Filtereinrichtung (16) identifiziert werden kann.

10. Schaltungsanordnung nach Anspruch 9, **dadurch gekennzeichnet, dass** die Schaltungsanordnung dazu ausgelegt ist, dass zusätzlich eine Kanalbandbreite des identifizierten Kanals bestimmt werden kann.

11. Verfahren zur Identifizierung eines Frequenzbandes (FB1, FB2, FB3), dem ein Uplink- oder Downlink-Signal übertragen wird, wobei
• ein ausgekoppeltes Uplink- oder Downlink-Signals bereitgestellt wird,
• mindestens ein Referenzsignals mit einer vorbestimmten Frequenz bereitgestellt wird,
• das ausgekoppelte Signal und das Referenzsignal gemischt werden,
• das gemischte Signal gefiltert wird,
• mindestens eine Signaleigenschaft des gefilterten Signals bestimmt wird,
• wenn eine Signalleistung von dem gefilterten Signal für eine der eingestellten Frequenzen von dem Referenzsignal größer ist als ein Schwellenwert, wird das Frequenzband, in welchem das übertragene Signal übertragen wird, als das Frequenzband identifiziert, zu welchem die eine von den eingestellten Frequenzen von dem Referenzsignal zugeordnet ist.

12. Verfahren nach Anspruch 11, **dadurch gekennzeichnet, dass** frequenzspezifische Referenzsignale mit verschiedenen Frequenzen erzeugt werden, wobei die frequenzspezifischen Referenzsignale jeweils mit dem ausgekoppelten Signal gemischt, die frequenzspezifischen gemischten Signale gefiltert und mindestens eine Signaleigenschaft der frequenzspezifischen gemischten Signale bestimmt wird, wobei das Frequenzband (FB1, FB2, FB3) in Abhängigkeit der frequenzspezifischen Signaleigenschaften bestimmt wird.

13. Verfahren nach Anspruch 11 oder 12, **dadurch gekennzeichnet, dass** mindestens eine Grenzfrequenz eines Filters (16) zur Bereitstellung des gefilterten Signals verändert wird.

14. Verfahren nach einem der Ansprüche 11 bis 13, **dadurch gekennzeichnet, dass** das Frequenzband (FB1, FB2, FB3) identifiziert wird, wobei folgend ein Kanal (K1, ... , K6) dieses Frequenzbands (FB1, FB2, FB3) identifiziert wird, wobei optional eine Kanalbandbreite des Kanals (K1, ... , K6) identifiziert wird.

15. Verfahren nach einem der Ansprüche 11 bis 14, **dadurch gekennzeichnet, dass** nach der Identifikation eines Frequenzbands (FB1, FB2, FB3) oder des Kanals (K1 ,... , K6) des übertragenen Signals eine Überwachung mindestens einer Signaleigenschaft und/oder die Identifizierung eines weiteren Frequenzbands (FB1, FB2, FB3) oder weiteren Kanals (K1 , ... , K6) gestartet wird, wobei optional eine Überwachung und die Identifizierung eines weiteren Frequenzbands (FB1, FB2, FB3) oder weiteren Kanals (K1 , ... , K6) sequentiell oder zeitgleich durchgeführt werden.

## Claims

1. Circuit arrangement (1) for transmitting uplink and downlink signals between at least one terminal (2) and at least one antenna (5), wherein the circuit arrangement (1) comprises at least one signal coupler (9) for providing a decoupled uplink or downlink signal,
**characterized in that**
the circuit arrangement (1) comprises at least one apparatus (15) for providing a reference signal comprising at least two or more adjustable frequencies, wherein the circuit arrangement (1) comprises at least one mixer (14) for mixing the decoupled signal and the reference signal, and at least one filter apparatus (16) for low-pass or bandpass filtering of the mixed signal, wherein the circuit arrangement (1) comprises at least one evaluation apparatus (7) for evaluating the filtered signal, which evaluation apparatus is designed, when a signal power of the filtered signal for one of the adjusted frequencies of the reference signal is greater than a threshold value, to identify the frequency band in which the transmitted signal is transmitted as the frequency band with which the one of the adjusted frequencies of the reference signal is associated.

2. Circuit arrangement according to claim 1, **characterized in that** the circuit arrangement (1) comprises an apparatus (17) for determining a signal power of the filtered signal.

3. Circuit arrangement according to any one of the preceding claims, **characterized in that** the circuit arrangement is designed such that a cut-off frequency of the filter apparatus (16) can be adjusted.

4. Circuit arrangement according to any one of the preceding claims, **characterized in that** the apparatus (15) for providing the reference signal is constructed as a phase-locked loop or comprises such a loop.

5. Circuit arrangement according to any one of the preceding claims, **characterized in that** the circuit arrangement (1) comprises at least one control apparatus (7) for adjusting the frequency of the reference signal and/or for adjusting the cut-off frequency of the filter apparatus (16).

6. Circuit arrangement according to any one of the preceding claims, **characterized in that** the circuit arrangement (1) comprises at least one apparatus for detecting signal transmission.

7. Circuit arrangement according to any one of the preceding claims, **characterized in that** the circuit arrangement (1) comprises at least one switching element (10), wherein a first port (9a) of the signal coupler (9) is connected to the mixer (14) in a first switching state of the switching element (10) and a further port (9b) of the signal coupler (9) is connected to the mixer (14) in a further switching state of the switching element (10).

8. Circuit arrangement according to any one of the preceding claims, **characterized in that** the circuit arrangement (1) comprises a bypass apparatus (11), wherein a signal is transmitted between the signal coupler (9) and the mixer (14) via the bypass apparatus (11).

9. Circuit arrangement according to any one of the preceding claims, **characterized in that** the circuit arrangement is designed such that, depending on the adjusted frequency and the at least one signal property, at least one channel (K1, ..., K6) can additionally be identified in which the transmitted signal is transmitted, wherein the circuit arrangement is optionally designed such that the channel (K1, ..., K6) can additionally be identified depending on the adjusted cut-off frequency of the filter apparatus (16).

10. Circuit arrangement according to claim 9, **characterized in that** the circuit arrangement is designed such that a channel bandwidth of the identified channel can additionally be determined.

11. Method for identifying a frequency band (FB1, FB2, FB3) in which an uplink or downlink signal is transmitted, wherein
- a decoupled uplink or downlink signal is provided,
- at least one reference signal of a predetermined frequency is provided,
- the decoupled signal and the reference signal are mixed,
- the mixed signal is filtered,
- at least one signal property of the filtered signal is determined,
- when a signal power of the filtered signal for one of the adjusted frequencies of the reference signal is greater than a threshold value, the frequency band in which the transmitted signal is transmitted is identified as the frequency band with which the one of the adjusted frequencies of the reference signal is associated.

12. Method according to claim 11, **characterized in that** frequency-specific reference signals of different frequencies are generated, wherein the frequency-specific reference signals are each mixed with the decoupled signal, the frequency-specific mixed signals are filtered and at least one signal property of the frequency-specific mixed signals is determined, wherein the frequency band (FB1, FB2, FB3) is determined depending on the frequency-specific signal properties.

13. Method according to claim 11 or 12, **characterized in that** at least one cut-off frequency of a filter (16) is changed to provide the filtered signal.

14. Method according to any one of claims 11 to 13, **characterized in that** the frequency band (FB1, FB2, FB3) is identified, wherein a channel (K1, ..., K6) of this frequency band (FB1, FB2, FB3) is subsequently identified, wherein optionally a channel bandwidth of the channel (K1, ..., K6) is identified.

15. Method according to any one of claims 11 to 14, **characterized in that**, after the identification of a frequency band (FB1, FB2, FB3) or the channel (K1, ..., K6) of the transmitted signal, monitoring of at least one signal property and/or the identification of a further frequency band (FB1, FB2, FB3) or a further channel (K1, ..., K6) is started, wherein optionally monitoring and the identification of a further frequency band (FB1, FB2, FB3) or further channel (K1, ..., K6) are performed sequentially or simultaneously.

## Revendications

1. Agencement de circuit (1) pour la transmission de signaux de liaison montante et de liaison descendante entre au moins un terminal (2) et au moins une antenne (5), dans lequel l'agencement de circuit (1) comprend au moins un coupleur de signaux (9) pour la mise à disposition d'un signal de liaison montante ou de liaison descendante découplé,
**caractérisé en ce que**
l'agencement de circuit (1) comprend au moins un appareil (15) pour la mise à disposition d'un signal de référence avec au moins deux ou plusieurs fréquences réglables, dans lequel l'agencement de circuit (1) comprend au moins un mélangeur (14) pour le mélange du signal découplé et du signal de référence et au moins un appareil de filtre (16) pour le filtrage passe-bas ou passe-bande du signal mélangé, dans lequel l'agencement de circuit (1) comprend au moins un appareil d'évaluation (7) pour l'évaluation du signal filtré, qui est conçu pour identifier, lorsqu'une puissance de signal du signal filtré pour une des fréquences réglées du signal de référence est supérieure à une valeur seuil, la bande de fréquences dans laquelle le signal transmis est transmis comme la bande de fréquences à laquelle une des fréquences réglées du signal de référence est attribuée.

2. Agencement de circuit selon la revendication 1, **caractérisé en ce que** l'agencement de circuit (1) comprend un appareil (17) pour la détermination d'une puissance de signal du signal filtré.

3. Agencement de circuit selon l'une quelconque des revendications précédentes, **caractérisé en ce que** l'agencement de circuit est conçu de sorte qu'une fréquence limite de l'appareil de filtre (16) peut être réglée.

4. Agencement de circuit selon l'une quelconque des revendications précédentes, **caractérisé en ce que** l'appareil (15) pour la mise à disposition du signal de référence est conçu comme une boucle à verrouillage de phase ou en comprend une telle.

5. Agencement de circuit selon l'une quelconque des revendications précédentes, **caractérisé en ce que** l'agencement de circuit (1) comprend au moins un appareil de commande (7) pour le réglage de la fréquence du signal de référence et/ou pour le réglage de la fréquence limite de l'appareil de filtre (16).

6. Agencement de circuit selon l'une quelconque des revendications précédentes, **caractérisé en ce que** l'agencement de circuit (1) comprend au moins un appareil de détection de transmission de signal.

7. Agencement de circuit selon l'une quelconque des revendications précédentes, **caractérisé en ce que** l'agencement de circuit (1) comprend au moins un élément de commutation (10), dans lequel un premier raccord (9a) du coupleur de signaux (9) est connecté au mélangeur (14) dans un premier état de commutation de l'élément de commutation (10) et un raccord supplémentaire (9b) du coupleur de signaux (9) est connecté au mélangeur (14) dans un état de commutation supplémentaire de l'élément de commutation (10).

8. Agencement de circuit selon l'une quelconque des revendications précédentes, **caractérisé en ce que** l'agencement de circuit (1) comprend un appareil de dérivation (11), dans lequel un signal est transmis entre le coupleur de signaux (9) et le mélangeur (14) par l'intermédiaire de l'appareil de dérivation (11).

9. Agencement de circuit selon l'une quelconque des revendications précédentes, **caractérisé en ce que** l'agencement de circuit est conçu de sorte qu'en fonction de la fréquence réglée et de la au moins une propriété de signal, au moins un canal (K1, ... , K6) peut en outre être identifié, dans lequel le signal transmis est transmis, dans lequel l'agencement de circuit est facultativement conçu de sorte que le canal (K1, ..., K6) peut en outre être identifié en fonction de la fréquence limite réglée de l'appareil de filtre (16).

10. Agencement de circuit selon la revendication 9, **caractérisé en ce que** l'agencement de circuit est conçu de sorte qu'une largeur de bande de canal du canal identifié peut en outre être déterminée.

11. Procédé d'identification d'une bande de fréquences (FB1, FB2, FB3) dans laquelle un signal de liaison montante ou de liaison descendante est transmis, dans lequel
- un signal de liaison montante ou de liaison descendante découplé est mis à disposition,
- au moins un signal de référence avec une fréquence prédéterminée est mis à disposition,
- le signal découplé et le signal de référence sont mélangés,
- le signal mélangé est filtré,
- au moins une propriété de signal du signal filtré est déterminée,
- si une puissance de signal du signal filtré pour une des fréquences réglées du signal de référence est supérieure à une valeur seuil, la bande de fréquences dans laquelle le signal transmis est transmis est identifiée comme la bande de fréquences à laquelle une des fréquences réglées du signal de référence est attribuée.

12. Procédé selon la revendication 11, **caractérisé en ce que** des signaux de référence spécifiques à la fréquence sont générés avec différentes fréquences, dans lequel les signaux de référence spécifiques à la fréquence sont respectivement mélangés avec le signal découplé, les signaux mélangés spécifiques à la fréquence sont filtrés et au moins une propriété de signal des signaux mélangés spécifiques à la fréquence est déterminée, dans lequel la bande de fréquences (FB1, FB2, FB3) est déterminée en fonction des propriétés de signal spécifiques à la fréquence.

13. Procédé selon la revendication 11 ou 12, **caractérisé en ce qu'**au moins une fréquence limite d'un filtre (16) est modifiée pour mettre à disposition le signal filtré.

14. Procédé selon l'une quelconque des revendications 11 à 13, **caractérisé en ce que** la bande de fréquences (FB1, FB2, FB3) est identifiée, dans lequel un canal (K1, ... , K6) de cette bande de fréquences (FB1, FB2, FB3) est ensuite identifié, dans lequel une largeur de bande de canal du canal (K1, ... , K6) est facultativement identifiée.

15. Procédé selon l'une quelconque des revendications 11 à 14, **caractérisé en ce qu'**après l'identification d'une bande de fréquences (FB1, FB2, FB3) ou du canal (K1, ... , K6) du signal transmis, une surveillance d'au moins une propriété de signal et/ou l'identification d'une bande de fréquences supplémentaire (FB1, FB2, FB3) ou d'un canal supplémentaire (K1, ... , K6) est lancée, dans lequel une surveillance et l'identification d'une bande de fréquences supplémentaire (FB1, FB2, FB3) ou d'un canal supplémentaire (K1, ... , K6) sont facultativement effectuées de manière séquentielle ou simultanée.
